# EUROPÄISCHE PATENTSCHRIFT

(11) **EP 3 534 057 B1**
(45) Veröffentlichungstag und Bekanntmachung des Hinweises auf die Patenterteilung: **04.11.2020**
(21) Anmeldenummer: 19160288.7
(22) Anmeldetag: 01.03.2019
(51) Int. Cl.: F21S 6/00, F21V 14/02, F21V 8/00, F21V 7/00, F21V 23/04, F21Y 115/10, F21Y 103/10, F21Y 105/16

(54) **STEH- ODER TISCHLEUCHTE**
FLOOR LAMP OR DESK LAMP
LAMPE DE TABLE OU LAMPADAIRE

(30) Priorität: 01.03.2018 DE 102018104746
(43) Veröffentlichungstag der Anmeldung: 04.09.2019
(73) Patentinhaber: TRILUX GmbH & Co. KG, 59759 Arnsberg (DE)
(72) Erfinder: Vogel, Britta, 59759 Arnsberg (DE); Schaub, Helmut, 59581 Warstein (DE)
(74) Vertreter: Lippert Stachow Patentanwälte Rechtsanwälte

(56) Entgegenhaltungen:
- EP-A1- 2 518 387
- WO-A1-2013/141020
- WO-A2-2009/105168
- DE-A1-102010 044 353
- DE-A1-102015 115 701
- US-A1- 2017 114 968
- US-A1- 2017 292 675

## Beschreibung

Die Erfindung betrifft eine Steh- oder Tischleuchte gemäß dem Oberbegriff von Anspruch 1 sowie ein Leuchtensystem mit einer Mehrzahl derartiger Steh- oder Tischleuchten.

Solche herkömmlichen Steh- oder Tischleuchten weisen einen Leuchtenkopf, der auch als Leuchtenkörper bezeichnet werden kann, einen Tragarm zum Tragen des Leuchtenkopfs sowie eine Fußeinrichtung zum Abstützen des Tragarms auf, wobei die Fußeinrichtung beispielsweise eine Standfläche oder eine Klemmvorrichtung umfassen kann zum Abstützen des Tragarms an einem Untergrund bzw. einem Abstützkörper. Der Leuchtenkopf bzw. Leuchtenkörper einer derartigen herkömmlichen Steh- oder Tischleuchte weist dabei ein Gehäuse auf sowie eine mit dem Gehäuse direkt oder indirekt, d.h. ohne oder unter Zwischenschaltung weiterer Bauteile, verbundene Direktlicht-Anordnung, zumindest umfassend ein Direktlicht-Leuchtmittel mit zugeordneter Lichtverteilungsplatte zur Bereitstellung eines direkten Lichtanteils, wobei vom Direktlicht-Leuchtmittel emittiertes Licht an einer Stirnseite der Lichtleiterplatte einkoppelbar und an einer Hauptseite, insbesondere einer Unterseite der Lichtleiterplatte auskoppelbar ist. Eine solche Lichtleiterplatte, die auch als Lichtverteilerplatte bezeichnet werden kann, kann einen quaderförmigen Körper meinen und zwei sich gegenüberliegende, als Hauptflächen bezeichnete Grenzflächen aufweisen, die wesentlich größer als andere Seitenflächen des Körpers sein können. Darüber hinaus weist der Leuchtenkopf bzw. Leuchtenkörper eine mit dem Gehäuse direkt oder indirekt verbundene Indirektlicht-Anordnung umfassend ein Indirektlicht-Leuchtmittel mit zugeordneter Lichtlenkstruktur zur Bereitstellung eines indirekten Lichtanteils auf, sodass eine solche herkömmliche Steh- oder Tischleuchte sowohl zur Bereitstellung von direktem Licht, beispielsweise zum direkten Ausleuchten von Arbeitsplätzen wie Tischoberflächen und darüber hinaus zum Bereitstellen eines Indirektlichtanteils für den jeweiligen Arbeitsplatz, beispielsweise durch Abgabe von Licht in andere Raumbereiche wie in Richtung zur Raumdecke, das dort reflektiert bzw. gestreut und als Indirektlichtanteil zumindest teilweise auf den jeweiligen Arbeitsplatz gelangt.

Eine solche herkömmliche Stehleuchte ist beispielsweise in der Offenlegungsschrift EP 3 187 773 A1 offenbart. Derartige herkömmliche Stehleuchten können insbesondere so ausgestaltet sein, dass Licht der Leuchte zu einem vorgegebenen Anteil als Indirektlicht nach oben, beispielsweise zur Decke, und zu einem Anteil als Direktlicht nach unten auf den dazugehörigen Arbeitsplatz, wie einem Schreibtisch abgestrahlt wird. Eine Indirektlicht-Anordnung einer Leuchte gibt insofern das Licht in einen solchen Raumbereich ab, dass es im Unterschied zu dem Licht der Direktlicht-Anordnung nicht direkt auf einen z.B. zu beleuchtenden Arbeitsplatz fällt, sondern erst nach Reflexion an externen, außerhalb der Leuchte angeordneten Reflexionsflächen wie Raumdecken und/oder Raumwänden. Grundsätzlich unterscheiden sich insofern die Abstrahlrichtungen von Indirektlicht-Anordnung und Direktlicht-Anordnung einer Leuchte.

Je nach Anwendung können herkömmliche Stehleuchten beispielsweise auf einem Arbeitsplatz, wie einem Schreibtisch aufgestellt bzw. an diesem befestigt oder seitlich zum Arbeitsplatz bzw. zum Arbeitstisch aufgestellt werden, beispielsweise auf einem Arbeitsplatz, wie einem Schreibtisch aufgestellt bzw. an diesem befestigt oder seitlich zum Arbeitsplatz bzw. zum Arbeitstisch aufgestellt werden, beispielsweise im Bereich einer Rückkante des Tisches. Grundsätzlich besteht dabei die Beleuchtungsaufgabe, den jeweiligen Arbeitsplatz optimal, beispielsweise homogen, auszuleuchten, so dass insbesondere die Direktlicht-Anordnung zur Erzeugung einer vorgegebenen Lichtverteilungskurve (LVK) ausgebildet sein kann. Eine zufriedenstellende Ausleuchtung des jeweiligen Arbeitsplatzes kann jedoch häufig bei herkömmlichen Steh- oder Tischleuchten nur erzielt werden, wenn diese an einer vorgegebenen Stelle auf bzw. an dem Arbeitsplatz platziert werden, so dass häufig ein Kompromiss bezüglich der optimalen Ausleuchtung des jeweiligen Arbeitsplatzes und des Standortes der Stehleuchte gesucht werden muss.

Die Offenlegungsschrift DE 10 2010 044 353 A1 betrifft eine Leuchte mit einem Leuchtenkopf, der erste Leuchtmittel zum Abstrahlen von indirektem Licht von einer Oberseite des Leuchtenkopfs und zweite Leuchtmittel zum Abstrahlen von direktem Licht von einer Unterseite des Leuchtkopfes umfasst, wobei der Leuchtenkopf relativ zum Leuchtenfuß oder zur Leuchtensäule drehbar angeordnet ist. Dabei kann ferner eine Verstellvorrichtung für Optiken der zweiten Leuchtmittel umfasst sein zum Verändern der Abstrahlung von direktem Licht. Die Offenlegungsschrift US 2017/0292675 A1 betrifft eine Lampe mit asymmetrischer Lichtverteilung, umfassend ein Gehäuse, in welchem eine Lichtquelle angeordnet ist und eine im Wesentlichen flache Lichtleiterplatte, wobei Licht an einer lateralen Kante der Lichtleiterplatte eingekoppelt und mittels eines auf die Platte angebrachten optischen Films an einer Hauptfläche ausgekoppelt wird.

Der vorliegenden Erfindung liegt dabei die Aufgabe zugrunde, eine Steh- oder Tischleuchte bereitzustellen, die im Vergleich zu herkömmlichen Leuchten flexibler an das jeweilige Beleuchtungsproblem angepasst werden kann, um einerseits eine möglichst optimale Ausleuchtung eines Arbeitsplatzes zu erreichen und darüber hinaus eine höhere Flexibilität bezüglich der Platzierung der jeweiligen Steh- oder Tischleuchte zum Arbeitsplatz bereitzustellen.

Diese Aufgabe löst die vorliegende Erfindung mit einer Steh- oder Tischleuchte mit den Merkmalen von Anspruch 1. Die erfindungsgemäße Leuchte zeichnet sich dadurch aus, dass die Direktlicht-Anordnung drehbar zum Gehäuse und zur Indirektlicht-Anordnung angeordnet ist, wobei die Drehachse etwa senkrecht zur Lichtleiterplatte verläuft.

Dadurch, dass die Direktlicht-Anordnung zum Gehäuse der erfindungsgemäßen Leuchte drehbar gelagert ist, erhöht sich die Flexibilität bei der Wahl des Aufstellortes relativ zum Arbeitsplatz, da nach der Wahl des Aufstellortes durch Drehen der Direktlicht-Anordnung zum Gehäuse eine Anpassung der Direktbeleuchtung der Arbeitsfläche erfolgen kann. Hierzu kann die Direktlicht-Anordnung zur asymmetrischen Abstrahlung von Licht bzw. zur Erzeugung einer asymmetrischen Lichtverteilungskurve, insbesondere asymmetrisch zur Mittelsenkrechten auf die Lichtverteilungsplatte oder asymmetrisch zu einer optischen Achse eines optischen Systems zur Lichtlenkung der Direktlicht-Anordnung, ausgebildet sein, derartig, dass das Licht nicht in alle Richtungen zur Beleuchtung einer Fläche im gleichen Maße abgestrahlt wird, so dass die auszuleuchtende Fläche in vorgegebene Richtungen stärker als in andere Richtungen ausgeleuchtet werden. Eine derartige asymmetrische Lichtverteilungskurve kann beispielsweise durch entsprechende Gestaltung einer Aus- bzw. Ablenkstruktur in oder an der Lichtleiterplatte erzielt werden. Eine asymmetrische Lichtabstrahlung bzw. Lichtverteilungskurve der Direktlicht-Anordnung der erfindungsgemäßen Stehleuchte zur Hauptabstrahlrichtung, die parallel zur Flächennormale der Lichtleiterplatte in Strahlrichtung liegen kann, kann zur Folge haben, dass beim Drehen der Direktlicht-Anordnung relativ zum Gehäuse um eine Flächennormale zur Lichtleiterplatte bzw. zur Hauptabstrahlrichtung die asymmetrische Lichtverteilungskurve auf dem Arbeitsplatz "gedreht" wird zur Optimierung der Ausleuchtung des jeweiligen Arbeitsplatzes. Dagegen kann bei der erfindungsgemäßen Steh- oder Tischleuchte die Indirektlicht-Anordnung zum Gehäuse fixiert bzw. starr gelagert sein, so dass sich bei der Drehung der Direktlicht-Anordnung zum Gehäuse die durch die Indirektlicht-Anordnung verursachte indirekte Beleuchtung des jeweiligen Arbeitsplatzes nicht ändert.

Die Angabe einer etwa senkrecht zur Lichtleiterplatte verlaufende Drehachse meint hier eine Drehachse, welche einen Winkel zu einer Hauptfläche der Lichtleiterplatte von zwischen 70 Grad und 90 Grad, insbesondere zwischen 75 Grad und 90 Grad aufweist. In einer Ausführungsform kann dieser Winkel etwa 85 bis 90 Grad betragen.

Vorteilhafte Weiterbildungen der Erfindung sowie weitere erfindungsgemäße Merkmale sind in der allgemeinen Beschreibung, der Figurenbeschreibung, den Figuren sowie den weiteren Patentansprüchen angegeben.

Vorzugsweise kann die Direktlicht-Anordnung zwischen zwei Extrem-Drehstellungen relativ zum Gehäuse der Leuchte stufenlos oder in einer anderen Ausführungsform abgestuft drehbar am Gehäuse gelagert sein. Zweckmäßigerweise kann die Lagerung der Direktlicht-Anordnung am Gehäuse so ausgeführt sein, dass erstere um einen Winkel von etwa 180 Grad, insbesondere um einen Winkel von etwa 120 Grad verdrehbar ist. In einer weiteren Ausführungsform kann auch vorgesehen sein, dass der Drehwinkelbereich zumindest 240 Grad oder gar 360 Grad beträgt.

Zweckmäßigerweise kann vorgesehen sein, die Direktlicht-Anordnung und die Indirektlicht-Anordnung in einer Richtung senkrecht zur Lichtleiterplatte der Direktlicht-Anordnung hintereinander bzw. übereinander anzuordnen, so dass ein kompakter Leuchtenkopf bzw. Leuchtenkörper bereitgestellt werden kann. Dabei können eine oder beide Licht-Anordnungen in der Art einer Sandwich-Struktur umfassend mehrere aufeinanderfolgende flächige optische Komponenten aufgebaut sein zur Verminderung der Bauhöhe des Leuchtenkopfs, in bzw. an welchem beide angebracht sind.

Eine kompakte Bauweise kann unterstützt werden durch das Vorsehen eines Gehäuses mit topfartiger Struktur, beispielsweise in Form einer Halbschale, wobei in einem Bodenabschnitt der topfartigen Struktur eine Öffnung vorgesehen sein kann, in welcher die Direktlicht-Anordnung drehbar angeordnet bzw. gelagert sein kann.

Vorzugsweise kann die Direktlicht-Anordnung einen etwa ringförmigen Rahmen aufweisen, der zumindest die Lichtleiterplatte und das Direktlicht-Leuchtmittel, insbesondere mehrere in Form einer Sandwichstruktur angeordnete optische Komponenten der Direktlicht-Anordnung umgreift und trägt, wobei sich der Rahmen zumindest abschnittsweise innerhalb der Öffnung im Bodenabschnitt der topfartigen Struktur des Gehäuses erstrecken kann. Dabei kann der ringförmige Rahmen mehrteilig, insbesondere zweiteilig, aufgebaut sein und Tragflanschabschnitte, insbesondere einen umlaufenden Tragflansch aufweisen, an welchem sich die Direktlicht-Anordnung abstützt bzw. zu dem diese drehbar gelagert ist.

Vorzugsweise können der, die Öffnung im Bodenabschnitt der topfartigen Struktur des Gehäuses festlegende Randabschnitt sowie äußere Mantelabschnitte des ringförmigen Rahmens der Direktlicht-Anordnung zusammen eine radiale Eingriffsanordnung bilden zum axialen Halten der Direktlicht-Anordnung in der Öffnung der topfartigen Gehäusestruktur. Dabei kann der beschriebene radiale Eingriff zwischen ringförmigem Rahmen der Direktlicht-Anordnung und dem die Öffnung der topfartigen Gehäusestruktur festlegenden Randabschnitt so ausgebildet sein, dass eine Drehbewegung zwischen Direktlicht-Anordnung und Gehäuse bereitstellt ist. Beispielsweise kann vorgesehen sein, dass der ringförmige Rahmen einen sich radial nach außen erstreckenden Kragenabschnitt aufweist, welcher die Öffnung am Bodenabschnitt der topfartigen Struktur des Gehäuses innenseitig des Gehäuses übergreift, wobei ein weiterer radial nach außen erstreckender Kragenabschnitt des Rahmens vorgesehen sein kann, welcher die Öffnung der topfartigen Struktur außenseitig des Gehäuses übergreift. Bei dieser Ausführungsform kann der die Öffnung am Boden des Gehäuses festlegende Randabschnitt als Feder in eine durch den Rahmen gestaltete Nut eingreifen, wobei der Rahmen bzw. die Nut drehbar zur besagten Feder gelagert sein. In einer anderen Ausführungsform kann auch vorgesehen sein, dass der ringförmige Rahmen der Direktlicht-Anordnung einen radial nach außen weisenden Vorsprungabschnitt in der Art einer Feder umfasst, der in eine im Bereich des die Öffnung im Bodenabschnitt der topfartigen Gehäusestruktur festlegenden Randabschnitts gebildete Nut eingreift und sich in dieser drehbar gelagert abstützt.

Um ein manuelles Einstellen der Direktlicht-Anordnung durch Drehen derselben zum Gehäuse bereitzustellen, kann ein Abschnitt des ringförmigen Rahmens aus der Öffnung im Bodenabschnitt nach außen aus dem Gehäuse, d.h. bei aufgestellter Leuchte in der Regel nach unten, herausragen und als Betätigungsabschnitt, beispielsweise als umlaufender Ringabschnitt, ausgebildet sein zum Drehen der Direktlicht-Anordnung unter Aufbringung einer Tangentialkraft auf diesen Betätigungsabschnitt.

In einer zweckmäßigen Weiterbildung der Erfindung kann vorgesehen sein, dass der ringförmige Rahmen der Direktlicht-Anordnung wärmeleitungstechnisch an das Direktlicht-Leuchtmittel angekoppelt ist zum Abführen von Verlustwärme. Diese Ausführungsform eignet sich insbesondere bei solchen Ausführungsformen bei welchen der ringförmige Rahmen der Direktlicht-Anordnung ein Material mit hoher Wärmeleitung und hoher Wärmekapazität aufweist, beispielsweise ein Metall, so dass ansonsten vorzusehende Kühlkörper vermieden werden können zur Bereitstellung einer kompakten Bauweise.

Um eine besonders leichtgängige Drehung der Direktlicht-Anordnung zum Gehäuse bereitzustellen, können zwischen diesen Lagerelemente, beispielsweise Wälz- oder Kugellager, vorgesehen sein.

Zur Auskopplung des in die Lichtleiterplatte der Direktlicht-Anordnung eingekoppelten Lichtes des Direktlicht-Leuchtmittels an einer der beiden Hauptflächen, insbesondere in eine Richtung in Einbaulage nach unten, kann vorgesehen sein, dass die Lichtleiterplatte an ihrer der lichtauskoppelnden Hauptseite gegenüberliegenden Hauptseite eine Strukturierung zur Umlenkung von Licht in Richtung zur lichtauskoppelnden Hauptfläche aufweist. Diese Strukturierung kann je nach Ausführungsform beispielsweise durch Fräsen, Lasern, Einfärben, Einpressen oder auch schon beim Herstellungsprozess zur Herstellung der Lichtleiterplatte in einem Spritzgießvorgang erzeugt werden. Hierbei eignen sich insbesondere Strukturierungen, die das Licht in Richtung zur lichtauskoppelnden Hauptfläche umlenken, wobei diese Umlenkung beispielsweise durch Reflektion, Beugung oder Brechung an den ein- bzw. angebrachten Strukturen erfolgen kann. Vorzugsweise können diese Strukturen ein- bzw. aufgebracht sein um eine gewünschte asymmetrische Abstrahlung bzw. asymmetrische Lichtverteilungskurve zu erzeugen. In einer Ausführungsform kann beispielsweise vorgesehen sein, eine Mehrzahl von beabstandeten linearen Strukturen, beispielsweise in Form von prismatischen Ausnehmungen vorzusehen zur Erzeugung von Reflexionsflächen, beispielsweise Totalreflexionsflächen, die verursachen, dass das Licht in Richtung zur lichtauskoppelnden Hauptseite reflektiert wird. In anderen Ausführungsformen können diese Strukturierungen auch gekrümmte Oberflächen oder Facetten aufweisen.

In einer weiteren Ausführungsform kann auch vorgesehen sein, die lichtauskoppelnde Hauptseite bzw. -fläche der Lichtleiterplatte der Direktlicht-Anordnung zu strukturieren, beispielsweise um an bestimmten Orten der lichtauskoppelnden Hauptseite eine Totalreflektion von innerhalb der Lichtleiterplatte transmittierendes Licht aufzuheben bzw. zu vermindern, so dass an diesen Stellen Licht des Direktlicht-Leuchtmittels ausgekoppelt wird.

Um die Effizienz der Direktlicht-Anordnung zu erhöhen, kann ein an der der lichtauskoppelnden Hauptseite gegenüberliegenden Hauptseite der Lichtleiterplatte angeordnetes Reflexionselement vorgesehen sein, so dass das in die Lichtleiterplatte eingekoppelte Licht nur an einer der beiden Hauptseiten ausgekoppelt wird und damit für die Direktlicht-Beleuchtung zur Verfügung steht. Ein solches Reflexionselement kann beispielsweise eine Reflexionsbeschichtung oder eine Reflexionsfolie sein, die an der, der lichtauskoppelnden Hauptseite gegenüber liegenden Hauptseite der Lichtleiterplatte angebracht oder aufgebracht sein kann.

Zur Bereitstellung einer vorgegebenen asymmetrischen Lichtverteilungskurve können je nach Ausführungsform ein oder mehrere, insbesondere optisch hintereinander in der Art einer Sandwichstruktur angeordnete, flächige optische Elemente zum Richten bzw. Lenken von Licht vorgesehen sein, die hinter der lichtauskoppelnden Hauptseite der Lichtleiterplatte angeordnet sein können. Derartige optische Elemente können je nach Ausführungsform eine Lichtlenkung über Brechung, Beugung, Reflexion und/oder Totalreflektion erzeugen. Beispielsweise kann ein in Lichtrichtung hinter der lichtauskoppelnden Hauptseite der Lichtleiterplatte angeordnetes Entblendungselement vorgesehen sein, das im Raster angeordnete Mikroprismen bzw. Mikrokegel aufweisen kann, um eine Entblendung des Leuchtkopfes der erfindungsgemäßen Leuchte bei einer Schrägansicht auf die Lichtaustrittsseite der Direktlicht-Anordnung bereitzustellen. In einer Ausführungsform kann die Direktlicht-Anordnung an ihrer nicht auskoppelnden Hauptseite das beschriebene optische Reflexionselement und an der lichtauskoppelnden Hauptseite das angegebene optische Entblendungselement aufweisen, zweckmäßigerweise in Form einer Sandwichstruktur dieser optischen Elemente der Direktlicht-Anordnung, die von dem obenstehend angegebenen ringförmigen Rahmen gehalten werden kann. Dabei kann das Reflexionselement als Diffusor ausgebildet sein, welcher auf der nicht lichtauskoppelnden Hauptseite der Lichtleiterplatte angebracht, insbesondere aufgeklebt sein kann, welcher das auftreffende Licht diffus, d.h. ungerichtet, in die Lichtleiterplatte zurückreflektiert.

Um die Direktlicht-Anordnung der erfindungsgemäßen Steh- oder Tischleuchte nicht nur in ihrer Höhe sondern auch in ihrer transversalen Ausdehnung senkrecht zur Drehachse kompakt zu halten, kann zweckmäßigerweise vorgesehen sein, dass die Direktlicht-Anordnung senkrecht zur Drehachse eine etwa kreisförmige Grundfläche aufweist mit einer optisch wirksamen kreissegmentförmigen Direktlicht-Austrittsfläche. Diese Gestaltung ermöglicht ferner die Anordnung des Direktlicht-Leuchtmittels innerhalb des ringförmigen Rahmens, so dass alle optischen Komponenten der Direktlicht-Anordnung zueinander starr angeordnet und relativ zum Gehäuse drehbar gelagert sein können, so dass mit dem Drehen der Direktlicht-Anordnung eine durch die optischen Eigenschaften der optischen Komponenten festgelegte Lichtverteilungskurve in einer Ebene verdreht werden kann, die senkrecht zur Drehachse verlaufen kann.

Bei der Gestaltung der Direktlicht-Anordnung kann vorgesehen sein, dass die Lichtleiterplatte eine kreissegmentförmige Grundfläche aufweist, wobei das Direktlicht-Leuchtmittel entlang einer Kreissehne des Kreissegments angeordnet ist, insbesondere entlang der Kreissehne, welche die kreissegmentförmige Grundfläche der Lichtleiterplatte beschränkt. Zweckmäßigerweise kann dabei vorgesehen sein, das Direktlicht-Leuchtmittel in Form einer Mehrzahl von zueinander entlang der Kreissehne des Kreissegments angeordneten LEDs auszubilden, so dass das Licht dieser LEDs an der durch die Kreissehne und die Höhe der Lichtleiterplatte definierten Grenzfläche in die Lichtleiterplatte eingekoppelt werden kann. Unter Umständen kann dabei auch vorgesehen sein, diese Grenzfläche zur Verbesserung der Einkopplung des Lichtes der LEDs zu strukturieren, beispielsweise durch das Ausbilden spezifischer Einkoppelflächen zur Erhöhung des Anteils des eingekoppelten Lichtes und/oder zur besseren Durchmischung des Lichtes innerhalb der Lichtleiterplatte der Direktlicht-Anordnung.

Vorzugsweise können in der Ausführungsform, bei welcher die Lichtleiterplatte eine kreissegmentförmige Grundfläche aufweist, lineare Strukturen zur Unterstützung der Lichtauskopplung an der lichtauskoppelnden Hauptseite parallel zur Kreissehne des Kreissegments verlaufen, beispielsweise durch in die Lichtleiterplatte parallel verlaufende und zueinander beabstandete prismenförmige Ausnehmungen, wobei die Tiefe der Ausnehmungen mit dem Abstand der jeweiligen Ausnehmung zur Einkoppelstirnseite zunehmen kann, um beispielsweise eine homogene Ausleuchtung einer Direktlicht-Auskoppelfläche der Direktlichtanordnung und/oder eine vom Abstand zur Einkoppelfläche unabhängige Intensität des ausgekoppelten Lichts oder einen bestimmten Intensitätsverlauf abhängig vom Abstand zur Einkoppelfläche bereitzustellen.

Für die Gestaltung der Indirektlicht-Anordnung der erfindungsgemäßen Steh- oder Tischleuchte können unterschiedliche Ausführungen zweckmäßig sein. In einer, wiederum eine kompakte Bauform des Leuchtenkörpers unterstützende Gestaltung, kann eine Trägerplatte vorgesehen sein zum Tragen des Indirektlicht-Leuchtmittels, sowie eine, von dem Leuchtmittel ausgehende Hintereinanderschaltung zumindest einer Lichtdurchmischungseinrichtung, einer Entblendungseinrichtung sowie einer optisch transparenten Abdeckplatte. Letztere kann unter Umständen entfallen, insbesondere bei solchen Ausführungsformen bei welchen die Gefahr einer Staubablagerung vermindert ist, beispielsweise dadurch, dass die Hauptabstrahlrichtung der Indirektlicht-Anordnung aufgrund einer spezifischen Ausrichtung des Leuchtenkopfs der erfindungsgemäßen Leuchte nicht in Richtung eines Deckenraums, sondern beispielsweise zur Seite gerichtet ist.

In der bevorzugten Ausführungsform weist das Indirektlicht-Leuchtmittel eine Mehrzahl von in einem Raster und voneinander beabstandet zueinander angeordnete LED-Einrichtungen auf, die auf der Trägerplatte angeordnet sind. Vorzugsweise kann die Lichtdurchmischungseinrichtung eine flächige, an das Raster der LED-Einrichtungen angepasste Wabenstruktur aufweisen mit einer Mehrzahl von Reflektortöpfen, in die jeweils eine LED-Einrichtung aufgenommen ist. Vorzugsweise können die Reflektortöpfe bzw. deren Wandstrukturen ein diffus reflektierendes Material umfassen, beispielsweise ein Mikrozellenmaterial, das eine diffus streuende Oberfläche besitzt.

In einer zweckmäßigen Ausführungsform kann die Entblendungseinrichtung der Indirektlicht-Anordnung eine Entblendungsfolie aufweisen, die transparent und zur Entblendung in eine vorgegebene Richtung ausgebildet ist. Eine solche Entblendungsfolie kann mikroprismatische Strukturen zur Bereitstellung einer blendungsbegrenzten Folienoptik aufweisen, wobei die Entblendungsfolie an der, den LED-Einrichtungen entfernt gelegenen offenen Stirnseite der Wabenstruktur aufgelegt sein kann. In einer weiteren Ausführungsform können die mikroprismatischen Strukturen der auf der Wabenstruktur aufliegenden Entblendungsfolie zur Blendungsbegrenzung in zwei zueinander senkrechte Richtungen, insbesondere in Richtungen schräg zu einer Lichtaustrittsfläche der Indirektlicht-Anordnung gestaltet sein. Besonders zweckmäßig hat sich eine Gestaltung herausgestellt, bei welcher die besagte Entblendungsfolie mikroprismatische Strukturen zur Entblendung in eine vorgegebene Richtung aufweist. Dagegen können zur Entblendung des Leuchtenkopfes in eine zur vorgegebenen Richtung senkrechten Richtung eine Mehrzahl von zueinander beabstandeten, insbesondere geradlinigen Entblendungsstegen vorgesehen sein, welche parallel und kongruent, d. h. deckungsgleich, zu Begrenzungsstegen der Reflektortöpfe der Wabenstruktur angeordnet sein bzw. verlaufen. Durch die beschriebene Gestaltung der Entblendungseinrichtung wird zum einen eine Entblendung in zwei zueinander senkrechte Richtungen für das Indirektlicht erreicht und zum anderen durch die beabstandeten, zueinander parallel und kongruent zu Wandabschnitten der Reflektortöpfe der Wabenstruktur verlaufende Stege eine lineare Anmutung des Leuchtenkopfes der erfindungsgemäßen Stehleuchte erzeugt.

In einer besonders bevorzugten Ausführungsform kann eine insbesondere transparente Abdeckplatte auf den Entblendungsstegen aufliegen, so dass auch die Indirektlicht-Anordnung eine Sandwichanordnung aus einer Mehrzahl von optisch hintereinander angeordneten optischen Komponenten umfassen kann.

Um eine hohe Flexibilität an die jeweiligen Nutzerbedürfnisse beim Betrieb der erfindungsgemäßen Stehleuchte bereitzustellen, kann diese eine Steuereinrichtung aufweisen zur Ansteuerung eines Betriebsgerätes für das Direktlicht-Leuchtmittel und/oder das Indirektlicht-Leuchtmittel. Dabei kann die Ansteuerung durch die Steuereinrichtung in Abhängigkeit extern zugeführter Steuerinformationen erfolgen, beispielsweise über eine externe Schnittstelle zur Kopplung an eine externe Steuerzentrale, in Abhängigkeit zugeführter Sensorsignale, entweder über an die erfindungsgemäße Steh- oder Tischleuchte angeschlossene Sensoren und/oder über externe Schnittstellen zugeführte Sensorsignale und/oder in Abhängigkeit von intern in einem beschreibbaren Speicher abgelegte Betriebsparameter durchführbar ist.

Zweckmäßigerweise kann die erfindungsgemäße Steh- oder Tischleuchte einen Bewegungs- oder Präsenzsensor, beispielsweise einen auch als Radarsensor bezeichneten Mikrowellensensor aufweisen. Es sei bemerkt, dass die Angabe "Bewegungs- oder Präsenzsensor" auch Sensoren umfasst, welche die Funktionalität sowohl eines Bewegungssensors als auch eines Präsenzsensors aufweisen.

Vorzugsweise kann vorgesehen sein, dass der Bewegungs- oder Präsenzsensor innerhalb oder an der Direktlicht-Anordnung und damit drehbar zum Gehäuse der erfindungsgemäßen Steh- oder Tischleuchte angeordnet ist. Hierdurch kann erreicht werden, dass mit dem Drehen der Direktlicht-Anordnung zur Optimierung der Lichtabstrahlung der erfindungsgemäßen Leuchte gleichzeitig der Bewegungs- oder Präsenzsensor mit ausgerichtet wird. Insbesondere im solchen Fällen, in welchen der Bewegungs- oder Präsenzsensor als Radarsensor ausgebildet ist, kann vorgesehen sein, dass der Sensor für einen Betrachter innerhalb der Direktlicht-Anordnung platziert und von außen nicht sichtbar ist.

Der Bewegungs- oder Präsenzsensor kann zur Erfassung eines Objektes in einem vorgegebenen Nahbereich von beispielsweise 1 m und in einem vorgegebenen Fernbereich von beispielsweise zwischen > 1 m und 5 m eingerichtet sein. Es kann vorgesehen sein, dass der Sensor einstellbar gestaltet ist, beispielsweise in Bezug auf seine Erfassungsrichtung, seinen Erfassungskegel und/oder zur Einstellung des Nahbereichs bzw. des Fernbereichs.

Dabei kann der Ausgang des Sensors mit der Steuereinrichtung verbunden sein, welche zur Ansteuerung des Direktlicht-Leuchtmittels und/oder des Indirektlicht-Leuchtmittels in Abhängigkeit des Ausgangssignals des Bewegungs- und Präsenzsensors ausgebildet sein kann. Beispielsweise kann die Ansteuerung eines oder beider Leuchtmittel auf der Grundlage einer vorgegebenen, tageszeitabhängigen Lichttemperatur-Einstellung durchgeführt werden. Hierzu können beide Leuchtmittel jeweils Mittel zur Abgabe von unterschiedlichen spektralen Lichtemissionen, d.h. unterschiedliche Lichttemperaturen aufweisen zur Einstellung einer variierenden Gesamtlichttemperatur. Als besonders zweckmäßig hat sich erwiesen, zumindest das Indirektlicht-Leuchtmittel in Bezug auf seine Lichttemperatur variabel, d. h. einstellbar zu gestalten. Zu diesem Zweck kann vorgesehen sein, dass die obenstehend angegebene LED-Einrichtung, die jeweils in einem Reflektortopf der Lichtdurchmischungseinrichtung aufgenommen ist, eine Warmlicht-LED und eine Kaltlicht-LED, d. h. mehrere Weißlicht-LEDs mit unterschiedlicher Lichttemperatur aufweist. Dabei können beide LED-Arten unabhängig voneinander ansteuerbar sein zum Einstellen einer vorgegebenen Lichttemperatur des von der Indirektlicht-Anordnung abgegebenen Lichtes zur Erzeugung eines Indirektlichtanteils durch Einstellen unterschiedlicher Dimmgrade beider LED-Arten. Die erfindungsgemäße Leuchte kann ferner ausgebildet sein, den Lichtstrom des Indirektlichts der Leuchte bei vorgegebener Lichttemperatur durch gleichzeitiges Dimmen der LEDs beider LED-Arten zu verändern.

Vorzugsweise kann die Steuereinrichtung sowohl das Indirektlicht-Leuchtmittel als auch das Direktlicht-Leuchtmittel in Abhängigkeit des Ausgangssignals des Bewegungs- oder Präsenzsensors steuern. Beispielsweise kann zweckmäßigerweise vorgesehen sein, dass die Steuereinrichtung eingerichtet ist, das Indirektlicht-Leuchtmittel zum Betrieb, d. h. zum Leuchten anzusteuern, wenn der Bewegungs- oder Präsenzsensor im Fernbereich ein Objekt erfasst. In ähnlicher Weise kann die Steuereinrichtung eingerichtet sein, das Direktlicht-Leuchtmittel sowie das Indirektlicht-Leuchtmittel zum Betrieb, d. h. zum Leuchten anzusteuern, wenn der Bewegungs- oder Präsenzsensor im Nahbereich ein Objekt erfasst, so dass für eine sich am Arbeitsplatz befindliche Person sowohl ein vorgegebener Direktlichtanteil als auch ein vorgegebener Indirektlichtanteil eingestellt werden kann. Darüber hinaus kann bei der erfindungsgemäßen Steh- oder Tischleuchte durch entsprechendes Ansteuern des Indirektlichtanteils eine tageszeitabhängige Lichttemperatur, beispielsweise unter Berücksichtigung einer vorgegebenen, insbesondere abgespeicherten HCL (Human Centric Light)-Kurven eingestellt werden.

Vorzugsweise kann die Steuerung des Direktlicht-Leuchtmittels sowie des Indirektlicht-Leuchtmittels im Ansprechen auf ein vom Bewegungs- oder Präsenzsensor im Nahbereich bzw. Fernbereich erfassten Objektes durchgeführt werden unter gleichzeitiger Berücksichtigung einer solchen circadianen Beleuchtung wie sie in Form einer derartigen HCL-Kurve abgelegt sein kann. In einer Ausführungsform kann beispielsweise vorgesehen sein, den Direktlichtanteil mit einer konstanten Farbtemperatur von etwa 3000 K bereitzustellen, während der Indirektlichtanteil durch entsprechende Ansteuerung der jeweiligen LED-Einrichtungen im Laufe des Tages Licht mit veränderlicher Farbtemperatur abgibt, beispielsweise anregendes Morgenlicht mit kaltweißen Licht zwischen 5000 K und 6500 K bis zu einer warmen, gedämpften Lichtstimmung am Abend mit warmweißem Licht im Bereich von 2700 K und 3200 K. Es versteht sich, dass diese Werte nur beispielhaft zu verstehen sind, prinzipiell sind die Farbtemperatur des Direktlichtanteil und des Indirektlichtanteil der erfindungsgemäßen Steh- oder Tischleuchte durch entsprechende Wahl des Direktlicht-Leuchtmittels und des Indirektlicht-Leuchtmittels, die in einer Ausführungsform auch beide mit veränderbarer Farbtemperatur und dimmbar ausgebildet sein können, einstellbar.

Zur Energieeinsparung kann zweckmäßigerweise vorgesehen sein, dass die Steuereinrichtung der erfindungsgemäßen Steh- oder Tischleuchte eingerichtet ist, das Direktlicht-Leuchtmittel zum Ausschalten anzusteuern, wenn der Bewegungs- oder Präsenzsensor der Leuchte im Nahbereich über eine vorgegebene Zeitdauer kein Objekt erfasst. In ähnlicher Weise kann die Steuereinrichtung einer erfindungsgemäßen Steh- oder Tischleuchte eingerichtet sein, das Indirektlicht-Leuchtmittel zum Ausschalten anzusteuern, wenn der Bewegungs- oder Präsenzsensor sowohl im Fernbereich als auch im Nahbereich über eine vorgegebene Zeitdauer, die sich von der vorstehend genannten vorgegebenen Zeitdauer unterscheiden kann, kein Objekt erfasst.

Es sei darauf hingewiesen, dass unter einem vom Bewegungs- oder Präsenzsensor erfassten Objekt in der Regel eine Person gemeint ist, welche sich im Nahbereich bzw. im Fernbereich des Bewegungs- oder Präsenzsensors aufhalten bzw. bewegen kann.

Es sei ferner darauf hingewiesen, dass die vorliegende Anmeldung neben der obenstehend erläuterten erfindungsgemäßen Steh- oder Tischleuchte umfassend einen Leuchtenkopf, einen Tragarm sowie eine Fußeinrichtung als weiterer Erfindungsgenstand einen Leuchtenkopf in Alleinstellung, d.h. unabhängig vom Tragarm sowie unabhängig von der Fußeinrichtung betrifft. Ein solcher erfindungsgemäßer Leuchtenkopf, der nachfolgend als erfindungsgemäßer Leuchtenkopf erster Art bezeichnet wird, kann alle unterschiedlichen Ausführungsformen eines Leuchtenkopfes umfassen, wie sie obenstehend mit Bezug auf die erfindungsgemäße Steh- oder Tischleuchte beschrieben sind. Insofern weist der erfindungsgemäße Leuchtenkopf erster Art in seiner Grundgestaltung zumindest auf: ein Gehäuse, eine mit dem Gehäuse verbundene Direktlicht-Anordnung zumindest umfassend ein Direktlicht-Leuchtmittel mit zugeordneter Lichtleiterplatte zur Bereitstellung eines direkten Lichtanteils, wobei vom Direktlicht-Leuchtmittel emittiertes Licht an einer Stirnseite der Lichtleiterplatte einkoppelbar und an einer Hauptseite der Lichtleiterplatte auskoppelbar ist, eine mit dem Gehäuse verbundene Indirektlicht-Anordnung umfassend ein Indirektlicht-Leuchtmittel mit zugeordneter Lichtlenkstruktur zur Bereitstellung eines indirekten Lichtanteils, wobei die Direktlicht-Anordnung drehbar zum Gehäuse und zur Indirektlicht-Anordnung angeordnet ist und die Drehachse etwa senkrecht zur Lichtleiterplatte verläuft. Wie erläutert umfasst der erfindungsgemäße Leuchtenkopf erster Art darüber hinaus alle obenstehend mit Bezug auf die erfindungsgemäße Steh- oder Tischleuchte beschriebenen Weiterbildungen in Bezug auf den Leuchtenkopf auf.

Die vorliegende Anmeldung umfasst darüber hinaus einen weiteren Erfindungsgegenstand eines Leuchtenkopfes zweiter Art, der sich von dem eben beschriebenen Erfindungsgegenstand eines Leuchtenkopfes erster Art allein dadurch unterscheidet, dass er keine Indirektlicht-Anordnung aufweist. Insofern umfasst ein solcher erfindungsgemäßer Leuchtenkopf zweiter Art in seiner Grundgestaltung ein Gehäuse, eine mit dem Gehäuse verbundene Direktlicht-Anordnung zumindest umfassend ein Direktlicht-Leuchtmittel mit zugeordneter Lichtleiterplatte zur Bereitstellung eines direkten Lichtanteils, wobei vom Direktlicht-Leuchtmittel emittiertes Licht an einer Stirnseite der Lichtleiterplatte einkoppelbar und einer Hauptseite der Lichtleiterplatte auskoppelbar ist, wobei die Direktlicht-Anordnung drehbar zum Gehäuse angeordnet ist und die Drehachse etwa senkrecht zur Lichtleiterplatte verläuft. Da dieser erfindungsgemäße Leuchtenkopf zweiter Art keine Indirektlicht-Anordnung aufweist, kann das Gehäuse nach oben durch ein Abdeckblech verschlossen sein. In weiteren vorteilhaften und erfindungsgemäßen Ausgestaltungen kann der erfindungsgemäße Leuchtenkopf zweiter Art alle Weiterbildungen in Bezug auf die Direktlicht-Anordnung und andere Gestaltung aufweisen, wie sie vorstehend für den Leuchtenkopf erster Art bzw. den Leuchtenkopf für die vorstehend beschriebene erfindungsgemäße Steh- oder Tischleuchte beschrieben ist.

Die vorliegende Anmeldung betrifft darüber hinaus einen weiteren Erfindungsgegenstand, namentlich einen Leuchtenkopf dritter Art, welcher sich vom Erfindungsgegenstand des Leuchtenkopfes erster Art dadurch unterscheidet, dass er keine Direktlicht-Anordnung, sondern allein eine Indirektlicht-Anordnung umfasst. Insofern weist ein erfindungsgemäßer Leuchtenkopf dritter Art in seiner Grundform die Merkmale auf: ein Gehäuse, eine mit dem Gehäuse verbundene Indirektlicht-Anordnung umfassend ein Indirektlicht-Leuchtmittel mit zugeordneter Lichtlenkstruktur zur Bereitstellung eines indirekten Lichtanteils, wobei die Indirektlicht-Anordnung starr, d. h. unbeweglich im Gehäuse befestigt ist. Da der erfindungsgemäße Leuchtenkopf dritter Art keine Direktlicht-Anordnung aufweist, kann das Gehäuse nach unten verschlossen sein, d.h. das Gehäuse kann im Bodenbereich so gestaltet sein, dass dort keine Öffnung vorliegt. Darüber hinaus kann der Erfindungsgegenstand eines Leuchtenkopfes dieser dritten Art alle obenstehend mit Bezug auf den Leuchtenkopf erster Art beschriebenen Ausführungsformen bzw. Merkmale aufweisen, welche die Indirektlicht-Anordnung und andere Gestaltung betreffen ohne Bezug auf eine Direktlicht-Anordnung.

Die beschriebenen weiteren Erfindungsgegenstände eines Leuchtenkopfes erster, zweiter und dritter Art können je nach Anwendung zur Verwendung in einer Steh- oder Tisch-, jedoch auch in einer Wandleuchte oder Deckenleuchte eingesetzt werden.

Um einen Indirektlichtanteil zu erfassen kann zweckmäßigerweise die erfindungsgemäße Steh- oder Tischleuchte einen insbesondere im Leuchtenkopf angeordneten ersten Lichtsensor umfassen, der einen Erfassungswinkelbereich aufweist, welcher mit einem Beleuchtungskegel der Indirektlicht-Anordnung der Leuchte überlappen kann. Zweckmäßigerweise kann der Ausgang des ersten Lichtsensors mit einer Steuereinrichtung verbunden sein, welche zur Ansteuerung des Direktlicht-Leuchtmittels und/oder des Indirektlicht-Leuchtmittels in Abhängigkeit des Ausgangssignals des Lichtsensors eingerichtet sein kann. Dadurch, dass der Erfassungswinkelbereich des ersten Lichtsensors so ausgerichtet sein kann, dass er von der Umgebung der erfindungsgemäßen Steh- oder Tischleuchte auf diese zurückgeworfenes Licht erfasst, das von der Indirektlicht-Anordnung dieser Leuchte ausgesendet wurde, ist die Leuchte in die Lage versetzt, einen Indirektlichtanteil am Ort des ersten Lichtsensors zu erfassen, um beispielsweise eine Konstantlichtregelung für den Indirektlichtanteil auf einen vorgegebenen Wert durchzuführen.

In einer anderen Ausführung kann der erste Lichtsensor der Leuchte einen zur Decke ausrichtbaren Erfassungswinkelbereich aufweisen um einen allgemeinen Indirektlichtanteil zu erfassen, der von einer Mehrzahl von sich im Raum befindlichen Leuchten und/oder durch ein natürliches Umgebungslicht erzeugt wird. Auch in dieser Ausführungsform kann die Leuchte eine Konstantlichtregelung durchführen, indem die Steuereinrichtung entsprechend ausgebildet ist, eine Anpassung des Betriebs ihres Indirektlicht-Leuchtmittels durchzuführen, um den Indirektlichtanteil konstant bzw. auf einem vorgegebenen Wert zu halten.

Zur weiteren verbesserten Steuerung der erfindungsgemäßen Leuchte kann insbesondere im Leuchtenkopf ein zweiter Lichtsensor vorgesehen sein zur Erfassung von auf dem Leuchtenkopf auftreffenden Lichts aus einem Erfassungswinkelbereich, der sich mit einem Beleuchtungskegel der Direktlicht-Anordnung der Leuchte überlappen kann. Dabei kann der Ausgang des zweiten Lichtsensors mit der Steuereinrichtung verbunden sein, welche zur Ansteuerung, d.h. zum Betrieb des Direktlicht-Leuchtmittels und/oder des Indirektlicht-Leuchtmittels in Abhängigkeit des Ausgangssignals des zweiten Lichtsensors ausgebildet sein kann. Dadurch, dass der Erfassungswinkelbereich des zweiten Lichtsensors sich mit dem Beleuchtungskegel der Direktlicht-Anordnung überlappt, erfasst der Sensor Licht, das beispielsweise von einer mittels der Direktlicht-Anordnung beleuchteten Tischoberfläche in Richtung zur Steh- oder Tischleuchte zurückgeworfen wird, so dass das vom zweiten Lichtsensor erfasste Licht ein Maß für den Direktlichtanteil der erfindungsgemäßen Steh- oder Tischleuchte darstellen kann. Dieses Maß für den Direktlichtanteil kann in einer Ausführungsform von der Steuereinrichtung der Leuchte verwendet werden, um eine Konstantlichtregelung des Direktlichtanteils der Leuchte auf einen vorgegebenen Wert durchzuführen.

In einer weiteren Ausgestaltung kann die erfindungsgemäße Steh- oder Tischleuchte auch vernetzbar zur Gestaltung eines Leuchten-Netzwerkes ausgebildet sein. Zu diesem Zweck kann die erfindungsgemäße Leuchte eine Netzwerkschnittstelle, insbesondere eine Drahtlos-Schnittstelle zum Ankoppeln an ein Leuchten-Netzwerk aufweisen und zum Austausch von Betriebsparametern und/oder Sensorsignalen mit weiteren, an das Leuchten-Netzwerk angeschlossenen Leuchten und/oder Sensoren ausgebildet sein. Diese Netzwerkschnittstelle kann beispielsweise eine Bluetooth-Schnittstelle oder eine WLAN-Schnittstelle sein, über die eine Mehrzahl von erfindungsgemäßen Leuchten zu einem erfindungsgemäßen Leuchten-Netzwerk zusammengeschlossen sein können. Ein derartiges Leuchtensystem eignet sich insbesondere zur Steuerung der Beleuchtung in einem Großraumbüro bzw. einem Raum mit einer Mehrzahl von Arbeitsplätzen, wobei an diesen Arbeitsplätzen jeweils zumindest eine der erfindungsgemäßen Steh- oder Tischleuchten angebracht bzw. aufgestellt sein kann. Zweckmäßigerweise können die vernetzten Leuchten bzw. deren Steuereinrichtungen so ausgebildet sein, dass sie über das Netz Informationen über Signale der jeweiligen Bewegungs- oder Präsenzsensoren austauschen und das jeweilige Indirektlicht-Leuchtmittel zum Leuchten ansteuern, wenn zumindest einer der Bewegungs- oder Präsenzsensoren der vernetzten Leuchten im Fernbereich ein Objekt erfasst, so dass alle Leuchten, die an das Leuchtensystem angeschlossen sind, ihr Indirektlicht-Leuchtmittel anschalten. Dabei werten die Bewegungs- oder Präsenzsensoren aller Leuchten das Vorhandsein von Objekten im Nah- und Fernbereich aus, wobei ein erfasstes Objekt im Fernbereich dazu führt, dass die jeweilige Leuchte eine entsprechende Information über das Netzwerk an alle angeschlossenen oder in einer anderen Ausführungsform nur an benachbarte Leuchten übermittelt, so dass diese dann alle ihr jeweiliges Indirektlicht-Leuchtmittel einschalten können.

Zweckmäßigerweise kann das erfindungsgemäße Leuchtensystem so eingerichtet sein, dass eine Erfassung eines Objektes in einem Nahbereich einer Leuchte allein zum Einschalten des Direktlicht-Leuchtmittels der jeweiligen Leuchte führt, jedoch keine Änderungen im Betrieb der anderen Leuchten innerhalb des Leuchtensystems zur Folge hat.

In einer vorteilhaften Ausführungsform kann ferner vorgesehen sein, dass das Leuchtensystem zusätzlich zu den vernetzten, zu einem Leuchten-Netzwerk zusammengeschlossenen Leuchten zumindest einen externen und über eine eigene Netzwerkschnittstelle an das Leuchten-Netzwerk angeschlossenen weiteren Sensor, insbesondere einen weiteren Bewegungs- oder Präsenzsensor aufweist, der einen von den vernetzten Leuchten unabhängigen Distanzbereich überwacht. Dabei kann nach der Erfassung eines Objektes durch den externen Sensor dieser im Leuchten-Netzwerk eine diesbezügliche Signalisierung verbreiten, die von den angeschlossenen Leuchten in der Art verarbeitet werden, dass sie ihr jeweiliges Indirektlicht-Leuchtmittel einschalten. Vorzugsweise kann dabei vorgesehen sein, dass alle Bewegungs- oder Präsenzsensoren innerhalb des Leuchten-Netzwerkes, d.h. sowohl die Bewegungs- oder Präsenzsensoren der Leuchten als auch der externe Bewegungs- oder Präsenzsensor (soweit vorhanden) kontinuierlich ihren jeweiligen Nah- und Fernbereich auswerten und bei Erfassung eines Objektes im Fernbereich eine entsprechende Signalisierung im Netz an alle angeschlossenen Leuchten senden, so dass alle Leuchten ihr Indirektlicht-Leuchtmittel einschalten bzw. eingeschaltet lassen. Sobald über eine vorgegebene Zeitdauer, die beispielsweise in den jeweiligen Steuereinrichtungen der Leuchten abgelegt sein kann, von keinem der Bewegungs- oder Präsenzsensoren ein Objekt im Fernbereich bzw. Nahbereich erfasst wird, erfolgt dementsprechend keine Signalisierung im Netz, so dass nach Ablauf der vorgegebenen Zeitdauer alle Leuchten ihr Indirektlicht-Leuchtmittel ausschalten. Dabei kann vorgesehen sein, dass die jeweiligen Zeitschwellen der Leuchten innerhalb des Leuchten-Netzwerkes nicht identisch sind, sondern beispielsweise einige der Leuchten eine längere Einschaltdauer ihres Indirektlicht-Leuchtmittels aufweisen, was je nach spezifischen räumlichen Gegebenheiten zweckmäßig sein kann.

Es sei bemerkt, dass die innerhalb des erfindungsgemäßen Leuchtensystems vernetzten, erfindungsgemäßen Leuchten wie obenstehend ausgebildet sein können, damit das System bzw. die Leuchten auf erfasste Bewegungen bzw. Präsenzen von Objekten im Nahbereich und/oder im Fernbereich gesteuert bzw. geregelt werden können. Dies betrifft beispielsweise die Einstellung des Indirektlichtanteils bezüglich der Farbtemperatur, die über eine HCL-Kurve, die in einem Speicher zentral im Netz oder in einer oder mehreren Leuchten hinterlegt sein kann, oder eine Konstantlichtregelung des Indirektlichtanteils über den ersten Lichtsensor, wobei ein Referenzwert zur Konstantlichtregelung für jede Leuchte individuell in dieser hinterlegt sein kann und die Konstantlichtregelung des Indirektlichtanteils auf der Grundlage des Ausgangs eines im Leuchtenkopf integrierten Lichtsensors durchführbar ist, der beispielsweise zur Decke gerichtet sein kann und das von der Decke reflektierte Licht misst. Darüber hinaus kann die Steuerung bzw. Regelung innerhalb des Leuchtensystems eine Konstantlichtregelung des Direktlichtanteils der jeweiligen Leuchte betreffen. Dabei kann das Direktlicht-Leuchtmittel angeschaltet kann im Ansprechen, d.h. nach dem Erkennen eines Objektes im Nahbereich dieser Leuchte. Das Direktlicht-Leuchtmittel kann mit einer Farbtemperatur gestartet werden, die in einer individuellen HCL-Kurve für die jeweilige Leuchte hinterlegt sein kann, wobei wiederum eine Konstantlichtregelung des Direktlichtanteils erfolgen kann auf der Grundlage eines hinterlegten Referenzwertes, insbesondere individuell für jede Leuchte in dieser hinterlegt und auf der Basis bzw. in Abhängigkeit eines weiteren Lichtsensors, welcher in Richtung des Arbeitsplatzes ausgerichtet ist und damit die Reflektion des Direktlichtanteils beispielsweise an einer Arbeitsplatte erfasst, d.h. misst.

Zweckmäßigerweise kann ferner vorgesehen sein, dass das Direktlicht-Leuchtmittel einer erfindungsgemäßen Leuchte durch ihre Steuereinrichtung ausgeschaltet wird, wenn der Bewegungs- oder Präsenzsensor über eine vorgegebene Zeitdauer kein Objekt innerhalb des Nahbereichs des Sensors erfasst.

Die Erfindung wird im Folgenden durch das Erläutern einiger Ausführungsformen unter Bezugnahme auf die beiliegenden Figuren erläutert, wobei
- Figur 1:: eine perspektivische Ansicht einer erfindungsgemäß ausgebildeten Leuchte;
- Figur 2:: eine Unteransicht auf den Leuchtenkopf der Leuchte gemäß Figur 1;
- Figur 3:: eine Aufsicht auf den Leuchtenkopf der erfindungsgemäßen Leuchte der Figur 1;
- Figur 4:: eine Schnittdarstellung durch den Leuchtenkopf der Leuchte der Figur 1;
- Figur 5:: die Direktlicht-Anordnung der Leuchte der Figur 1 und
- Figur 6:: die Indirektlicht-Anordnung zusammen mit dem Leuchtenkopfgehäuse der erfindungsgemäßen Leuchte der Figur 1
zeigt.

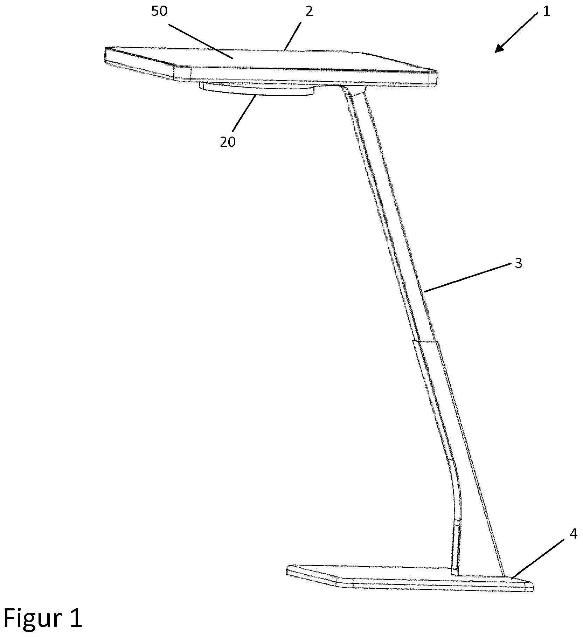

Figur 1 zeigt eine erfindungsgemäß ausgebildete Tischleuchte 1 zur Verwendung auf einem Schreibtisch. Sie weist einen Leuchtenkopf 2 mit einer Indirektlicht-Anordnung 50 zur Bereitstellung einer Indirektlicht-Komponente sowie mit einer Direktlicht-Anordnung 20 zur Bereitstellung einer Direktlicht-Komponente auf der Arbeitsfläche auf, wobei der Leuchtenkopf 2 von einem hier in seiner Höhe verstellbaren Tragarm 3 abgestützt ist, der sich über einen Fuß 4 am Schreibtisch abstützt. Es sei darauf hingewiesen, dass in einer weiteren Ausführungsform die erfindungsgemäße Stehleuchte 1 als Stehleuchte, die auch als Standleuchte bezeichnet wird, ausgebildet sein kann, die sich vom Boden abstützt und zur direkten als auch zur indirekten Beleuchtung eines Arbeitsplatzes wie eines Schreibtisches eingesetzt werden kann.

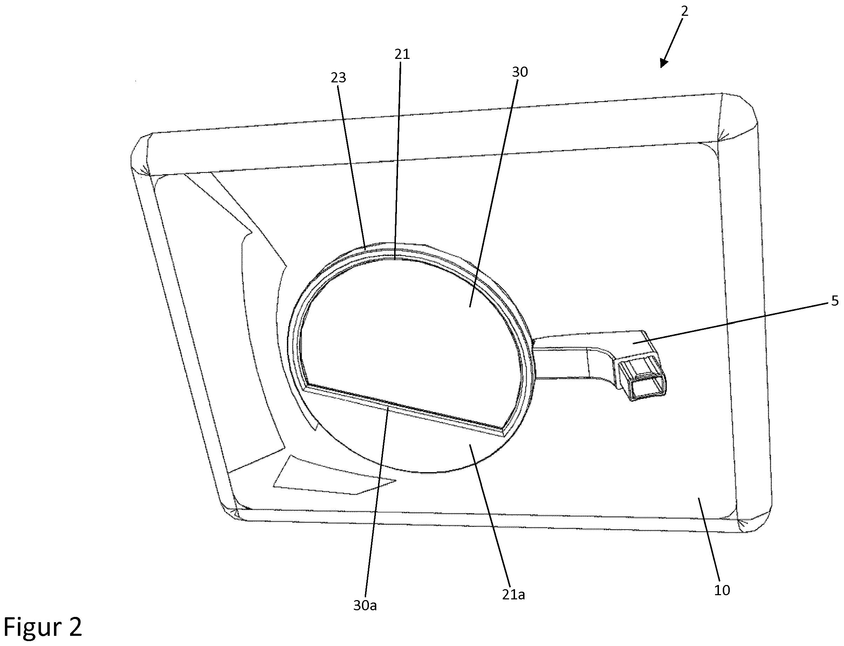

Figur 2 zeigt eine Unteransicht auf den Leuchtenkopf 2, der in seiner Betriebsposition in Richtung zur Arbeitsfläche ausgerichtet wird. Zur Klarheit der Darstellung ist der Tragarm 3 entfernt. Erkennbar weist der Leuchtenkopf 2 an seiner Unterseite einen Adapter 5 auf, der auf den Tragarm 3 aufsetzbar ist, wobei die nicht dargestellte elektrische Versorgung im hohlen Tragarm 3, siehe Figur 1, verläuft. In der beschriebenen Ausführungsform weist der Leuchtenkopf 2 ein flaches Gehäuse 10 mit rechteckförmiger Grundfläche auf. Etwa mittig an der in Figur 2 angegebenen Unterseite des Gehäuses 10 ist die Direktlicht-Anordnung 20 vorgesehen, die sich durch eine hier etwa kreisrunde Öffnung im Gehäuse 10 erstreckt und außenseitig ein kreissegmentförmiges, flächiges optisches Element 30 umfasst, aus dem das von der Leuchte 1 abgegebene Direktlicht in Richtung auf eine zugeordnete Arbeitsfläche austritt. Die in ihrer Grundfläche kreisförmige Direktlicht-Anordnung 20 wird auf der in Figur 2 angegebenen Lichtaustrittsseite für das Direktlicht durch einen Außenring 21 vervollständigt, der sich über das flächige Element 30 hinaus nach in Einbaulage unten in Richtung zur Arbeitsfläche erstreckt und damit das flächige Element 30 überragt. Dabei weist der Außenring 21 einen sich parallel zum flächigen optischen Element 30 erstreckenden Flachabschnitt 21a auf, der die kreisrunde Grundfläche der Direktlicht-Anordnung 20 vervollständigt, als Abdeckung dient und selbst eine kreissegmentförmige Ausdehnung besitzt. Der Außenring 21 umfasst eine als Betätigungsfläche ausgebildete Mantelfläche 23, an welcher ein Benutzer angreifen kann und durch Aufbringen einer tangentialen Kraft die Direktlicht-Anordnung 20 relativ zum Gehäuse 10 gedreht werden kann. Hierzu ist die Direktlicht-Anordnung 20 in noch zu beschreibender Art drehbar zum Gehäuse 10 an diesem gelagert.

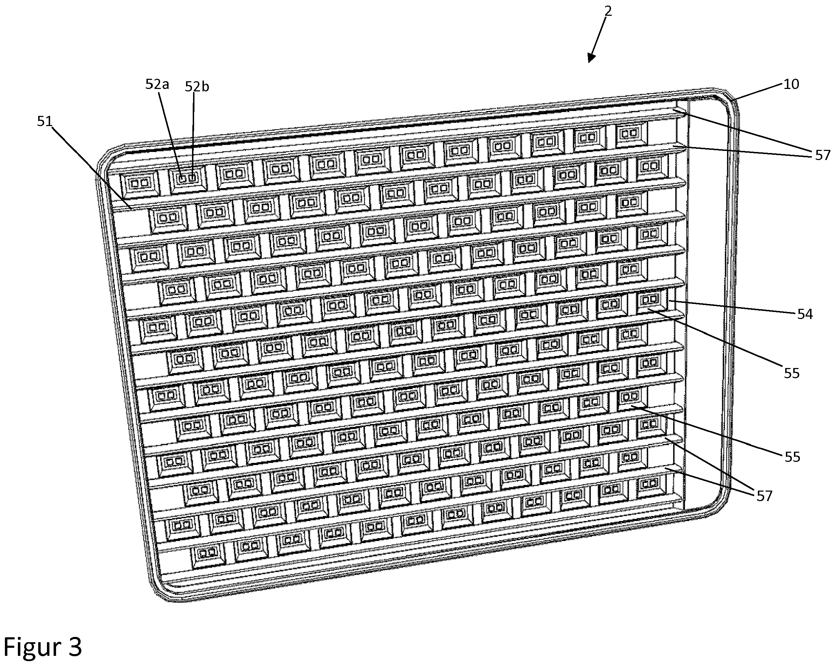

Figur 3 zeigt eine perspektivische Ansicht auf die in Einbaulage auf die Oberseite des Leuchtenkopfs 2 mit Blick auf die auch am Gehäuse 10 des Leuchtenkopfs 2 angebrachte Indirektlicht-Anordnung 50. Diese liegt in dem als flache Halbschale ausgebildeten Gehäuse 10 und umfasst in der beschriebenen Ausführungsform als wesentliche Bestandteile eine flächige, an das Gehäuse 10 angepasste Leiterplatte 51, auf welcher in einem vorgegebenen Raster eine Vielzahl von LED-Paaren 52a, 52b beabstandet angeordnet sind, wobei die LED-Paare 52a, 52b jeweils eine Warmweiß-LED und eine Kaltweiß-LED entsprechend einer Farbtemperatur von etwa 3000 K und 5000 K aufweisen, wobei die LEDs unterschiedlicher Farbtemperatur getrennt voneinander betrieben, insbesondere gedimmt werden können zur Einstellung einer vorgegebenen Farbmischtemperatur des abgegebenen Indirektlichtes. Zur Lichtdurchmischung und zur Entblendung ist auf die Leiterplatte 51 eine an dessen Fläche und das Raster der LED-Anordnung angepasste Lichtdurchmischungseinrichtung in Form einer Wabenstruktur, welche für jedes der LED-Paare 52a, 52b einen Reflektortopf bereitstellt, in welchem das jeweilige LED-Paar 52a, 52b angeordnet und das von den LEDs abgegebene Licht an den jeweiligen Wandstrukturen der Reflektortöpfe der Wabenstruktur statistisch, d. h. diffus reflektiert bzw. gestreut wird, wobei gleichzeitig durch die vorgegebene Höhe der Reflektortöpfe in Einbaulage nach oben eine Entblendung der Indirektlicht-Anordnung 50 erzielt wird. In Figur 3 nicht erkennbar, ist in der beschriebenen Ausführungsform auf die Wabenstruktur 54 bzw. die Reflektortöpfe 55 eine Entblendungsfolie aufgelegt, welche sich über die gesamte Wabenstruktur 54 bzw. die Oberseite des Gehäuses 10 des Leuchtenkopfs 2 erstreckt. In einer anderen Ausführungsform kann auf diese Entblendungsfolie verzichtet werden.

In der beschriebenen Ausführungsform sind auf der hier nicht sichtbaren Entblendungsfolie, die eine weitere Entblendung in Richtung der in der Figur sichtbaren kurzen Kanten des Gehäuses erzeugt, parallel zu Wandabschnitten der Reflektortöpfe 55 angeordnete und zueinander beabstandete Entblendungsstege 57 vorgesehen, welche aus einem hochreflektierenden Material hergestellt oder hochreflektierend beschichtet sind und das Erscheinungsbild der Indirektlicht-Anordnung 50 zusammen mit der Wabenstruktur 54 bestimmen. Da die in Figur 3 angegebene Oberseite des Leuchtenkopfs 2 in der Regel in Richtung zum Deckenraum ausgerichtet ist, kann in der beschriebenen Ausführungsform eine optisch transparente Abdeckplatte vorgesehen sein um zu vermeiden, dass sich Staub auf den beschriebenen Entblendungsstrukturen absetzt.

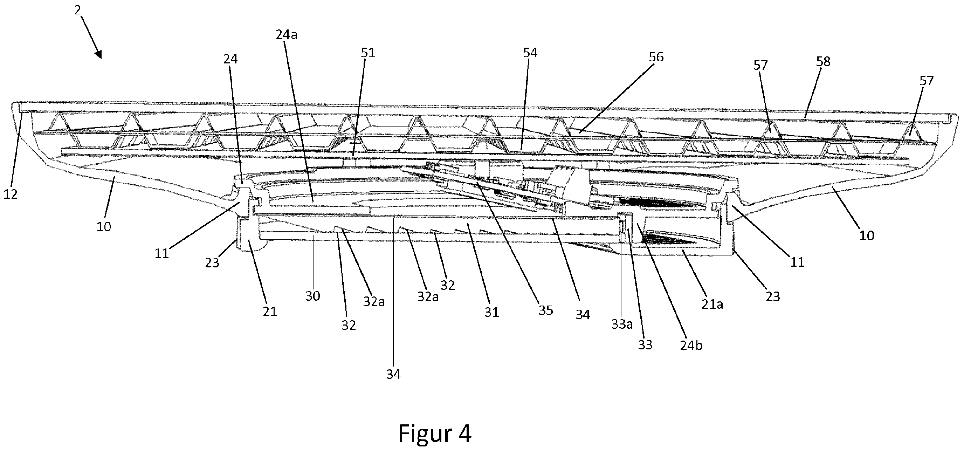

Figur 4 zeigt den Leuchtenkopf 2 der erfindungsgemäßen Tischleuchte 1 der Figur 1 in einer Schnittdarstellung, wobei die Schnittebene die Hauptstrahlrichtung der Indirektlicht-Anordnung 50 enthält, welche hier koaxial zur Drehachse der Direktlicht-Anordnung 50 verläuft. Das Gehäuse 10 ist als flache Halbschale ausgebildet mit einer zentrischen, kreisförmigen Öffnung im Bodenabschnitt der Schale, in welcher die Direktlicht-Anordnung 20 drehbar gelagert ist. Die Direktlicht-Anordnung 20 stützt sich hierzu über eine Rahmenstruktur, umfassend einen Außenring 21 und einen zu diesem zur Öffnung axial nach innen verlagerten und mit dem Außenring 21 radial im Eingriff befindlichen Innenring 24 ab, die zusammen an ihrer radialen Außenmantelfläche eine umlaufende radiale Nut bilden, in welcher ein Tragsteg 11 eingreift, welcher durch den die Öffnung im Bodenabschnitt des Gehäuses festlegenden Randabschnitt gebildet wird. Der umlaufende Tragsteg 11 und die umlaufende, durch den Außenring 21 und den Innenring 24 der Direktlicht-Anordnung 20 bereitgestellte Nut bilden insofern eine radiale Eingriffsanordnung zum axialen Halten der Direktlicht-Anordnung 20 in der Öffnung der topfartigen Struktur des Gehäuses 10, derart, dass die Direktlicht-Anordnung 20 drehbar am Gehäuse 10 gelagert ist. Hierzu weist der Außenring 21, der sich axial aus der Öffnung nach unten aus dem Gehäuse 10 heraus erstreckt, eine radiale Mantelfläche 23 auf, die hier als Ringfläche ausgebildet ist, an welcher ein Benutzer angreifen kann zum Aufbringen einer zur Mantelfläche 23 tangentialen Kraft zum Drehen der verbundenen Ringe 21, 24 und damit der gesamten Direktlicht-Anordnung relativ zum Gehäuse 10.

Wie obenstehend mit Bezug auf Figur 2 erläutert, umfasst der Außenring 21 einen kreissegmentförmigen Flachabschnitt 21a, der sich an die radiale Mantelfläche 23 anschließt, zu dieser etwa senkrecht und radial nach innen verlaufend ausgebildet ist und eine kreissehnenförmige Begrenzung aufweist. Dieser kreissegmentförmige Flachabschnitt 21a ist an das kreissegmentförmige optische Element 30, das die Lichtaustrittsfläche der Direktlicht-Anordnung 20 bereitstellt, angepasst, sodass die Direktlicht-Anordnung 20 in der beschriebenen Ausführungsform eine etwa kreisförmige Grundfläche aufweist, siehe Figur 2. Verdeckt durch den Flachabschnitt 21a des Außenrings 21 ist entlang der Kreissehne 30a des kreissegmentförmigen optischen Elementes 30 eine LED-Leiterplatte 33 angeordnet, die in Reihe und beabstandet zueinander angeordnete LEDs aufweist, welche sich entlang der angegebenen Kreissehne 30a erstrecken. Dabei ist die Platine 33 an einem von diesem Flachabschnitt 24a des Innenrings 24 sich axial nach unten erstreckenden Steg 24b angebracht. In der beschriebenen Ausführungsform ist die Ringstruktur der Teile 21, 24 aus einem Metall hergestellt, so dass die gesamte Ringstruktur als Kühlkörper für die LED-Leiterplatte 33 mit den darauf befindlichen LEDs 33a dient.

Wie aus Figur 4 hervorgeht, erstreckt sich die LED-Leiterplatte 33 entlang einer Einkoppel-Stirnseite der Lichtleiterplatte 31 zur Einkopplung des von den LEDs 33a abgegebenen Lichtes in dieselbe. Die Lichtleiterplatte 31 kann auch als Lichtverteilungsplatte bezeichnet werden, da sie das eingekoppelte Licht im Wesentlichen über eine Totalreflektion an ihren Hauptflächen führt, bis es in der beschriebenen Ausführungsform an ihrer in Figur 4 nach unten weisenden Hauptseite ausgekoppelt wird. Hierzu weist die Lichtleiterplatte 31 parallel zur beschriebenen Kreissehne 30a und beabstandet zueinander verlaufende prismatische Ausnehmungen 32 auf, die hier Totalreflexionsflächen 32a bereitstellen, an welchen das in der Lichtleiterplatte 31 propagierende Licht zur oberen Hauptfläche bzw. Hauptseite reflektiert wird. An der oberen Hauptseite ist in der beschriebenen Ausführungsform eine Reflektorfolie 34 angebracht, welche das auftreffende Licht vollständig zurück auf die untere Hauptseite reflektiert, an welcher es dann zur Bereitstellung einer vorgegebenen Lichtverteilungskurve für das Direktlicht austritt. In Lichtrichtung hinter der Lichtleiterplatte 31 ist das schon beschriebene, hier auch kreissegmentförmige, flächige optische Element 30 angeordnet, welches eine Mikrostrukturierung in Form von regelmäßig bzw. in einem strukturierten Raster angeordnete Mikrokegeln, insbesondere an seiner Außenfläche aufweist, welche eine Entblendung der Direktlicht-Anordnung 20 bei seitlicher Betrachtung bereitstellen. In einer anderen Ausführungsform kann das kreissegmentförmige, flächige optische Element eine Mikrostrukturierung in Form von zufällig und ungeordnet, an seiner Außenfläche und/oder seiner Innenfläche angeordnete Mikrokegeln aufweisen.

Wie aus der Darstellung der Figur 4 hervorgeht, sind die parallel zueinander verlaufenden linearen Ausnehmungen 32, die hier im Schnitt senkrecht zur Längserstreckung prismen-, insbesondere dreieckförmig gestaltet sein können, in ihrer Höhenerstreckung in das Material der Lichtleiterplatte 31 nicht identisch, sondern variieren mit dem Abstand zur Einkoppelfläche. In der beschriebenen Ausführungsform kann durch diese Maßnahme insbesondere eine inhomogene Ausleuchtung der lichtauskoppelnden Hauptseite und damit eine asymmetrische Auskopplung des Direktlichtes und eine asymmetrische Lichtverteilung relativ zur Drehachse der Direktlicht-Anordnung 20 erzielt werden, so dass durch Drehen der Direktlicht-Anordnung 20 relativ zum Gehäuse 10 die Lichtverteilung auf einer Arbeitsfläche in einer Ebene unterhalb der Direktlicht-Anordnung einstellbar ist. Es sei betont, dass durch die kreissegmentförmige Lichtleiterplatte bzw. das kreissegmentförmige, flächige optische Element, die mit der Direktlicht-Anordnung als Teil desselben drehbar angeordnet sind, eine asymmetrische Lichtverteilung relativ zur Drehachse der Direktlicht-Anordnung 20 verursacht ist, allein schon dadurch, dass die Direktlicht-Anordnung eine kreissegmentförmige Lichtaustrittsfläche aufweist.

In einer nicht dargestellten Ausführungsform kann auch vorgesehen sein, an der das Licht auskoppelnden Hauptseite lichtauskoppelnde Strukturen vorzusehen, wie Aufrauhungen oder dergleichen, um eine Totalreflektion in diesem Bereich aufzuheben und damit die Auskopplung von Direktlicht zu ermöglichen. Bei einer solchen Ausführungsform kann unter Umständen das Vorsehen eines Reflektors an oder auf der nicht auskoppelnden Hauptseite der Lichtleiterplatte 31 entfallen. Der Fachmann erkennt, dass durch die spezifische Gestaltung der Lichtleiterplatte 31 grundsätzlich eine beliebige Lichtverteilungskurve erzeugbar ist, unter Umständen auch unter Verwendung weiterer, der Lichtleiterplatte 31 nachgeschalteten optischen Elemente, die alle innerhalb der beschriebenen Rahmenstruktur gehalten und mit dieser relativ zum Gehäuse 10 drehbar gelagert sein können.

An der Direktlicht-Anordnung 20 auch befestigt und insofern mit dieser drehbar zum Gehäuse 10 gelagert ist in der beschriebenen Ausführungsform eine Schaltungsplatine 35, welche die notwendigen elektronischen Schaltungsbauelemente zum Versorgen und Ansteuern des Direktlicht-Leuchtmittels und des Direktlicht-Leuchtmittels trägt.

Aus Figur 4 geht ferner die Anordnung der Indirektlicht-Anordnung 50 der erfindungsgemäßen Leuchte 1 hervor, die hier wiederum sandwichartig realisiert ist. Auf der Leiterplatte 51 sind wie schon mit Bezug auf Figur 3 erläutert, eine Vielzahl von LED-Paaren 52a, 52b rasterförmig angeordnet, die in der Darstellung der Figur 4 verdeckt sind. Für jede dieser LED-Paare 52a, 52b wird durch die eine Wabenstruktur 54 aufweisende Durchmischungseinrichtung 54 jeweils ein offener Reflektortopf 55 bereitgestellt, dessen Begrenzungswandungen aus einem diffus streuenden Material gebildet sind. Die Wandungen dieser Reflektortöpfe 55 dienen zum einen zur Durchmischung des Lichtes der beiden spektral unterschiedlich emittierenden LEDs und zum anderen aufgrund ihrer Ausdehnung in Richtung zur Lichtaustrittsfläche des Indirektlichtes zur Bereitstellung einer Entblendung der Indirektlicht-Anordnung 50. Auf diese Durchmischungseinrichtung 54 ist in Richtung zur Lichtaustrittsfläche ein weiteres optisches Element in Form einer Entblendungsfolie 56 vorgesehen, welche zur Entblendung in seitlicher Richtung eine Mikrostrukturierung aufweist. Daran schließen sich in Strahlrichtung mit den Wandungen der Reflektortöpfe 55 verlaufende und auf die Entblendungsfolie 56 aufgelegte sowie parallel zueinander sich erstreckende lineare Entblendungsstege 57 an, welche in der beschriebenen Ausführungsform hochreflektiert beschichtete, stabförmige Profile mit dreieckförmigem Querschnitt sind. Die Indirektlicht-Anordnung 50 wird in der beschriebenen Ausführungsform durch eine transparente Abdeckplatte 58 abgeschlossen, welche die Lichtaustrittsfläche für die Indirektlicht-Anordnung 50 darstellt und die sich in ihrem Randbereich an einem umfänglichen Anlageflansch 12 des Gehäuses 10 abstützt. Dabei ist die Indirektlicht-Anordnung 50 als zusammengesetzte Sandwichstruktur ausgebildet und kann als Einheit nach dem elektrischen Anschließen an die Versorgungs- und Steuerplatine 35 in das Gehäuse 10 durch Auflegen des Randbereichs der optischen Platte 58 auf den Anlageflansch 12 des Gehäuses 10 eingesetzt und an diesem befestigt werden.

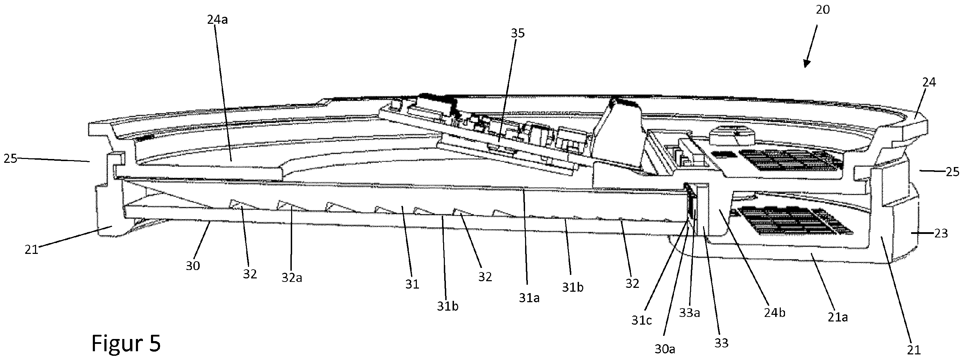

Figur 5 zeigt die Direktlicht-Anordnung 20 der Tischleuchte 1 in einer Einzeldarstellung. Erkennbar werden die LED-Leiterplatte 33 und die weiteren, hintereinander angeordneten optischen Komponenten, hier die Reflexionsfolie 34, die Lichtleiterplatte 31 sowie das auch als Abdeckplatte wirkende kreissegmentförmige optische Element 30 zwischen dem Außenring 21 und dem Innenring 24 gehalten. Beide Ringelemente 21, 24 bilden eine Lagernut 25 aus, in welche der Tragsteg 11 des Gehäuses 10 zum drehbaren Lagern der Direktlicht-Anordnung 20 eingreift, siehe Figur 4.

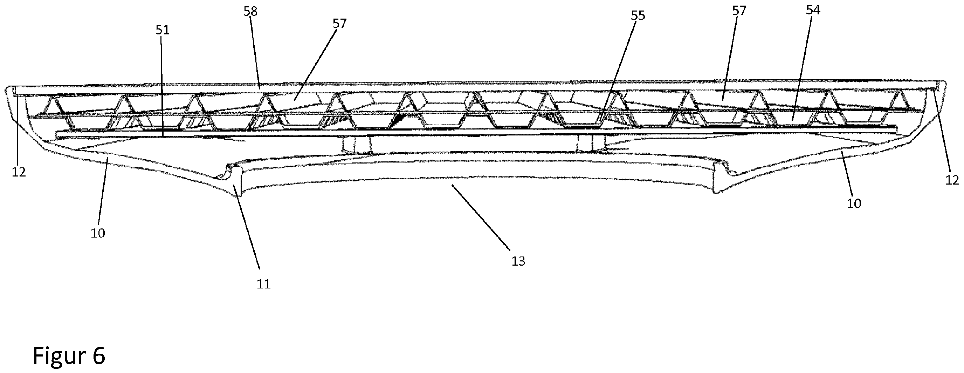

Figur 6 zeigt in einer vergrößerten Darstellung die in das Gehäuse 10 eingesetzte Indirektlicht-Anordnung 50 des erfindungsgemäßen Leuchtenkopfes 2 der erfindungsgemäßen Leuchte der Figur 1. Die in der beschriebenen Ausführungsform kreisrunde Öffnung 13 im Bodenabschnitt des Gehäuses 10 kann in einer nicht dargestellten Ausführungsform entfallen, bei welcher das Gehäuse 10 allein eine Indirektlicht-Anordnung 50 trägt, so dass bei dieser Ausführungsform der Bodenabschnitt des Gehäuses 10 geschlossen sein kann.

In der dargestellten Ausführungsform kann die erfindungsgemäße Steh- oder Tischleuchte 1 einen Bewegungs- oder Präsenzsensor aufweisen, der insbesondere auf der Schaltungsplatine 35 angeordnet sein kann, so dass dieser zusammen mit der Direktlicht-Anordnung 20 zum Gehäuse der Leuchte gedreht und ausgerichtet werden kann. Dabei kann vorgesehen sein, dass der Sensor, welcher beispielsweise als Radarsensor ausgebildet sein kann, Objekte, insbesondere sich bewegende Objekte, in zumindest zwei Distanzbereichen zu erfassen, beispielsweise in einem vorgegebenen Nahbereich und in einem vorgegebenen Fernbereich zur erfindungsgemäßen Leuchte. Je nach Ausführungsform können die zumindest beiden Distanzbereiche, welche in einer Ausführungsform angrenzend zueinander festgelegt sein können, durch den Nutzer einstellbar gestaltet sein, beispielsweise durch entsprechende Einstellmöglichkeiten direkt am Sensor. Der Sensorausgang ist grundsätzlich mit einer Steuereinrichtung der erfindungsgemäßen Steh- oder Tischleuchte 1 verbunden, welche das Ausgangssignal des Sensors zum Betrieb bzw. Ansteuern des Direktlicht-Leuchtmittels und/oder des Indirektlicht-Leuchtmittels verwendet bzw. in Abhängigkeit des Sensorsignals die beiden Leuchtmittel zum Betrieb steuert. In einer Ausführungsform ist die Steuerung derart ausgebildet, dass das Indirektlicht-Leuchtmittel eingeschaltet wird, wenn der Bewegungs- oder Präsenzsensor ein Objekt innerhalb des Fernbereichs, jedoch nicht innerhalb des Nahbereichs erfasst. Erst wenn innerhalb des Nahbereichs ein Objekt erfasst wird, schaltet die Steuereinrichtung auch das Direktlicht-Leuchtmittel ein, um einen vorgegebenen Indirektlicht- und Direktlicht-Anteil auf einer zugeordneten Arbeitsfläche bereitzustellen. In ähnlicher Weise kann die Steuereinrichtung ausgebildet sein, das Direktlicht-Leuchtmittel auszuschalten, wenn der Bewegungs- oder Präsenzsensor der erfindungsgemäßen Steh- oder Tischleuchte 1 über eine vorgegebene Zeitdauer kein Objekt im vorgegebenen Nahbereich erfasst und darüber hinaus auch das Indirektlicht-Leuchtmittel ausschaltet, wenn der Sensor der Leuchte 1 über eine vorgegebene zweite Zeitdauer kein Objekt innerhalb des vorgegebenen Fernbereichs erfasst.

In einer Weiterbildung der erfindungsgemäßen Steh- oder Tischleuchte 1 kann diese im Bereich der Unterseite des Leuchtenkopfs 2, d. h. im Bereich der Lichtaustrittsfläche der Direktlicht-Anordnung 20 einen Lichtsensor aufweisen, der ausgebildet ist, dass durch die Direktlicht-Anordnung 20 auf die zu beleuchtende Fläche, beispielsweise eine Arbeitsfläche, geworfene Licht und nachfolgend von dieser reflektierte Licht zu erfassen, so dass das Ausgangssignal dieses Lichtsensors in der Steuereinrichtung als Maß für die Lichtintensität der auf der jeweiligen Arbeitsfläche auftreffenden Lichtes herangezogen werden kann. In einer Ausführungsform kann die Steuereinrichtung der erfindungsgemäßen Steh- oder Tischleuchte 1 das Ausgangssignal dieses Lichtsensors zur Konstantlichtregelung des Direktlichtanteils der Leuchte 1, d. h. zum Ansteuern des Dimmgrades des Direktlicht-Leuchtmittels verwenden.

In einer weiteren Ausführungsform ist ein weiterer Lichtsensor in der erfindungsgemäßen Steh- oder Tischleuchte integriert zur Erfassung eines Indirektlichtanteils bzw. von Umgebungslichtes, wobei das Ausgangssignal dieses Sensors von der Steuereinrichtung der Leuchte herangezogen werden kann zur Konstantlichtregelung des Indirektlichtanteils bzw. des Indirektlicht-Leuchtmittels.

In einer Weiterbildung der Erfindung weist die erfindungsgemäße Steh- oder Tischleuchte 1 eine Netzwerkschnittstelle auf, insbesondere zur Ankopplung an ein drahtloses Netzwerk, in dem eine Mehrzahl derartiger Leuchten koppelbar ist. In einer Ausführungsform erfolgt die Kopplung mehrerer Leuchten über ein Bluetooth-Netzwerk, wobei die so gekoppelten Leuchten Betriebs- und/oder Sensorinformationen austauschen können zur Steuerung der Leuchtmittel aller im Leuchtensystem gekoppelten bzw. vernetzten erfindungsgemäßen Steh- oder Tischleuchten. In einer Ausführungsform ist ferner vorgesehen, dass die vernetzten Leuchten die Ausgangssignale ihrer jeweiligen Bewegungs- oder Präsenzsensoren austauschen und alle im Leuchtensystem gekoppelten Leuchten ihr Indirektlicht-Leuchtmittel einschalten bzw. eingeschaltet lassen, solange zumindest eine der Leuchten in ihrem vorgegebenen Fernbereich ein Objekt erfasst. Alle Leuchten schalten in dieser Ausführungsform erst dann ihr jeweiliges Direktlicht-Leuchtmittel ein, wenn ihr jeweiliger Bewegungs- oder Präsenzsensor im Nahbereich ein Objekt erfasst.

### Bezugszeichenliste

- 1: Steh- oder Tischleuchte
- 2: Leuchtenkopf
- 3: Tragarm
- 4: Fuß
- 5: Adapter
- 10: Gehäuse
- 11: Tragsteg
- 12: Anlageflansch
- 13: Bodenöffnung
- 20: Direktlicht-Anordnung
- 21: Außenring
- 21a: Flachabschnitt
- 23: Radiale Mantelfläche
- 24: Innenring
- 24a: Flachabschnitt
- 24b: Steg
- 25: Lagernut
- 30: Optisches Element
- 30a: Kreissehne
- 31: Lichtleiterplatte
- 31a: Nichtauskoppelnde Hauptseite
- 31b: Auskoppelnde Hauptseite
- 31c: Einkoppel-Stirnseite
- 32: Prismenausnehmung
- 32a: Totalreflexionsfläche
- 33: LED-Schaltungsplatte
- 33a: LED
- 34: Reflektorfolie
- 35: Schaltungsplatine
- 50: Indirektlicht-Anordnung
- 51: Leiterplatte
- 52a: Warmweiß-LED
- 52b: Kaltweiß-LED
- 54: Durchmischungseinrichtung
- 55: Reflektortopf
- 56: Entblendungsfolie
- 57: Entblendungssteg
- 58: Optische Abdeckplatte
- Z: Hauptstrahlrichtung

## Patentansprüche

1. Steh- oder Tischleuchte (1), aufweisend einen Leuchtenkopf (2), einen Tragarm (3) zum Tragen des Leuchtenkopfs (2) sowie eine Fußeinrichtung (4) zum Abstützen des Tragarms (3), wobei der Leuchtenkopf (2) umfasst:
- ein Gehäuse (10),
- eine mit dem Gehäuse (10) verbundene Direktlicht-Anordnung (20) zumindest umfassend ein Direktlicht-Leuchtmittel mit zugeordneter Lichtleiterplatte (31) zur Bereitstellung eines direkten Lichtanteils, wobei vom Direktlicht-Leuchtmittel emittiertes Licht an einer Stirnseite der Lichtleiterplatte (31) einkoppelbar und an einer Hauptseite der Lichtleiterplatte (31) auskoppelbar ist,
- eine mit dem Gehäuse (10) verbundene Indirektlicht-Anordnung (50) umfassend ein Indirektlicht- Leuchtmittel mit zugeordneter Lichtlenkstruktur zur Bereitstellung eines indirekten Lichtanteils, **dadurch gekennzeichnet, dass** die Direktlicht-Anordnung (20) drehbar zum Gehäuse (10) und zur Indirektlicht-Anordnung (50) angeordnet ist und die Drehachse etwa senkrecht zur Lichtleiterplatte (31) verläuft.

2. Steh- oder Tischleuchte (1) nach Anspruch 1, **dadurch gekennzeichnet, dass** das Gehäuse (10) eine topfartige Struktur aufweist mit einer Öffnung in einem Bodenabschnitt der topfartigen Struktur, in welcher die Direktlicht-Anordnung (20) drehbar angeordnet ist, wobei vorgesehen sein kann, dass die Direktlicht-Anordnung (20) einen ringförmigen Rahmen aufweist, dass der Rahmen zumindest abschnittsweise innerhalb der Öffnung der topfartige Struktur des Gehäuses (10) angeordnet ist und dass die optischen Komponenten der Direktlicht-Anordnung (20) umfassend zumindest das Direktlicht-Leuchtmittel sowie die Lichtleiterplatte (31) trägt.

3. Steh- oder Tischleuchte (1) nach Anspruch 2, **dadurch gekennzeichnet, dass** der die Öffnung im Bodenabschnitt der topfartigen Struktur des Gehäuses (10) festlegende Randabschnitt sowie äußere Mantelabschnitte des ringförmige Rahmens eine radiale Eingriffsanordnung bilden zum axialen Halten der Direktlicht-Anordnung (20) in der Öffnung der topfartige Struktur des Gehäuses (10).

4. Steh- oder Tischleuchte (1) nach Anspruch 2 oder 3, **dadurch gekennzeichnet, dass** ein Abschnitt des ringförmigen Rahmens die Öffnung der topfartigen Struktur in Strahlrichtung der Direktlicht-Anordnung (20) überragt und als Betätigungsabschnitt ausgebildet ist zum Drehen der Direktlicht-Anordnung (20) unter Aufbringen einer Tangentialkraft auf den Betätigungsabschnitt.

5. Steh- oder Tischleuchte (1) nach Anspruch 2, **dadurch gekennzeichnet, dass** der ringförmige Rahmen wärmeleitungstechnisch an das Direktlicht-Leuchtmittel angekoppelt ist zum Abführen von Verlustwärme.

6. Steh- oder Tischleuchte (1) nach einem der Ansprüche 1 bis 5, **dadurch gekennzeichnet, dass** die Lichtleiterplatte (31) der Direktlicht-Anordnung (20) an ihrer der lichtauskoppelnden Hauptseite gegenüberliegenden Hauptseite eine Strukturierung zur Umlenkung von Licht in Richtung zur lichtauskoppelnden Hauptfläche aufweist, wobei vorgesehen sein kann, dass die Strukturierung eine Mehrzahl von beabstandeten linearen Strukturen zur Bereitstellung von Ausnehmungen festlegenden Brechflächen in die Lichtleiterplatte (31) umfasst.

7. Steh- oder Tischleuchte (1) nach einem der Ansprüche 1 bis 6, **dadurch gekennzeichnet, dass** die Direktlicht-Anordnung (20) ferner ein an der der lichtauskoppelnden Hauptseite gegenüberliegenden Hauptseite der Lichtleiterplatte (31) angeordnetes, insbesondere als Diffusor ausgebildetes Reflexionselement und ein in Lichtrichtung hinter der lichtauskoppelnden Hauptseite der Lichtleiterplatte (31) angeordnetes Entblendungselement aufweist zur Bereitstellung einer asymmetrischen Lichtverteilungskurve.

8. Steh- oder Tischleuchte (1) nach einem der Ansprüche 1 bis 7, **dadurch gekennzeichnet, dass** die Direktlicht-Anordnung (20) senkrecht zur Drehachse eine etwa kreisförmige Grundfläche aufweist mit einer optisch wirksamen kreissegmentförmigen Direktlicht-Austrittsfläche.

9. Steh- oder Tischleuchte (1) nach einem der Ansprüche 1 bis 8, **dadurch gekennzeichnet, dass** die Lichtleiterplatte (31) eine kreissegmentförmige Grundfläche aufweist, wobei das Direktlicht-Leuchtmittel entlang einer Kreissehne (30a) des Kreissegments angeordnet ist.

10. Steh- oder Tischleuchte (1) nach einem der Ansprüche 1 bis 9, **dadurch gekennzeichnet, dass** die Indirektlicht-Anordnung (50) eine Trägerplatte zum Tragen des zweiten Leuchtmittels, sowie eine in Indirektlicht-Abstrahlrichtung Hintereinanderschaltung einer Lichtdurchmischungseinrichtung, einer Entblendungseinrichtung und einer optisch transparenten Abdeckplatte aufweist.

11. Steh- oder Tischleuchte (1) nach einem der Ansprüche 1 bis 10, **dadurch gekennzeichnet, dass** das Indirektlicht-Leuchtmittel eine Mehrzahl von in einem Raster und voneinander beabstandet zueinander angeordneten LED-Einrichtungen aufweist, wobei die Lichtdurchmischungseinrichtung eine flächige, an das Raster der LED-Einrichtungen angepasste Wabenstruktur (54) aufweist mit einer Mehrzahl von Reflektortöpfen (55), in die jeweils eine LED-Einrichtung aufgenommen ist.

12. Steh- oder Tischleuchte (1) nach einem der Ansprüche 10 oder 11, **dadurch gekennzeichnet, dass** die Entblendungseinrichtung eine Entblendungsfolie (34) aufweist, die an der, den LED-Einrichtungen entfernt gelegenen offenen Stirnseite der Wabenstruktur (54) auf dieser aufliegt, wobei vorgesehen sein kann, dass die Entblendungsfolie (34) zur Entblendung des aus dem Leuchtenkopf (2) austretenden Indirektlichtes in eine vorgegebene Richtung ausgebildet ist, und dass zur Entblendung des aus dem Leuchtenkopf (2) austretenden Indirektlichtes in eine zur vorgegebene Richtung senkrechte Richtung eine Mehrzahl von zueinander beabstandeten Entblendungsstegen (57) vorgesehen sind, welche parallel und kongruent (deckungsgleich) zu Begrenzungsstegen der Reflektortöpfen (55) der Wabenstruktur (54) angeordnet und auf der Entblendungsfolie (34) aufliegen.

13. Steh- oder Tischleuchte (1) nach einem der Ansprüche 1 bis 12, **gekennzeichnet durch** eine Steuereinrichtung zur Ansteuerung eines Betriebsgerätes des Direktlicht-Leuchtmittels und/oder des Indirektlicht-Leuchtmittels, wobei die Ansteuerung **durch** die Steuereinrichtung in Abhängigkeit extern zugeführter Steuerinformation zur Festlegung von Betriebsparameter, in Abhängigkeit zugeführter Sensorsignale und/oder in Abhängigkeit von intern in einem beschreibbaren Speicher abgelegten Betriebsparameter durchführbar ist, wobei ein Bewegungs- oder Präsenzsensor zur Erfassung in einem vorgegebenen Nahbereich und in einem vorgegebenen Fernbereich vorgesehen sein kann, dessen Ausgang mit der Steuereinrichtung verbunden ist, welche zur Ansteuerung des Direktlicht-Leuchtmittels und/oder des Indirektlicht-Leuchtmittels in Abhängigkeit des Ausgangssignals des Bewegungs- oder Präsenzsensors ausgebildet ist.

14. Steh- oder Tischleuchte (1) nach Anspruch 13, **dadurch gekennzeichnet, dass** die Steuereinrichtung eingerichtet ist, das Indirektlicht-Leuchtmittel zum Betrieb anzusteuern, wenn der Bewegungs- oder Präsenzsensors im Fernbereich ein Objekt erfasst hat, und/oder das Direktlicht-Leuchtmittel sowie das Indirektlicht-Leuchtmittel zum Betrieb anzusteuern, wenn der Bewegungs- oder Präsenzsensors im Nahbereich ein Objekt erfasst hat.

15. Steh- oder Tischleuchte (1) nach Anspruch 13 oder 14, **dadurch gekennzeichnet, dass** die Steuereinrichtung eingerichtet ist, das Indirektlicht-Leuchtmittel zum Ausschalten anzusteuern, wenn der Bewegungs- oder Präsenzsensors im Nahbereich über eine vorgegebene Zeitdauer kein Objekt erfasst hat.

16. Steh- oder Tischleuchte (1) nach einem der Ansprüche 12 bis 15, **gekennzeichnet durch** einen im Leuchtenkopf (2) angeordneten ersten Lichtsensor mit einem Erfassungswinkelbereich, welcher mit einem Beleuchtungskegel der Indirektlicht-Anordnung (50) überlappt, zur Erfassung von auf den Leuchtenkopf (2) auftreffenden Indirektlichtes, wobei der Ausgang des Lichtsensors mit der Steuereinrichtung verbunden ist, welche zur Ansteuerung des Direktlicht-Leuchtmittels und/oder des Indirektlicht-Leuchtmittels in Abhängigkeit des Ausgangssignals des Lichtsensors ausgebildet ist.

17. Steh- oder Tischleuchte (1) nach einem der Ansprüche 12 bis 16, **gekennzeichne**t **durch** einen im Leuchtenkopf (2) angeordneten zweiten Lichtsensor zur Erfassung von auf den Leuchtenkopf (2) auftreffenden Lichtes aus einem Erfassungswinkelbereich, der sich mit einem Beleuchtungskegel der Direktlicht-Anordnung (20) überlappt, wobei der Ausgang des zweiten Lichtsensors mit der Steuereinrichtung verbunden ist, welche zur Ansteuerung des Direktlicht-Leuchtmittels und/oder des Indirektlicht-Leuchtmittels in Abhängigkeit des Ausgangssignals des zweiten Lichtsensors ausgebildet ist.

18. Steh- oder Tischleuchte (1) nach einem der Ansprüche 12 bis 17, **gekennzeichnet durch** eine Netzwerkschnittstelle zum Ankoppeln an ein Leuchten-Netzwerk und zum Austausch von Betriebsparameter und/oder Sensorsignalen mit weiteren, an das Leuchten-Netzwerkes angeschlossenen, Leuchten.

19. Leuchtensystem mit einer Mehrzahl von Steh- oder Tischleuchten (1) nach Anspruch 18, welche jeweils über ihre Netzwerkschnittstelle zu einem Leuchten-Netzwerkes zusammengeschlossen sind, wobei die vernetzten Leuchten (1) ausgebildet sein können, Informationen über Signale der jeweiligen Bewegungs- oder Präsenzsensors auszutauschen und das jeweilige Indirektlicht-Leuchtmittel zum Leuchten anzusteuern, wenn zumindest einer der Bewegungs- oder Präsenzsensoren der vernetzten Leuchten im Fernbereich ein Objekt erfasst.

20. Leuchtensystem nach Anspruch 19, **gekennzeichnet durch** einen an das Leuchten-Netzwerk angeschlossenen und Informationen über sein Ausgangssignal über das Leuchten-Netzwerk an angeschlossene Leuchten sendenden externen Bewegungs- oder Präsenzsensor, wobei die vernetzten Leuchten (1) ausgebildet sind, Informationen über Erfassungssignale des externen Bewegungs- oder Präsenzsensors zu empfangen und das jeweilige eigene Indirektlicht-Leuchtmittel zum Leuchten anzusteuern, wenn der externen Bewegungs- oder Präsenzsensor ein Objekt erfasst.

## Claims

1. Floor lamp or desk lamp (1) that has a lamp head (2), a support arm (3) for supporting the lamp head (2) as well as a foot arrangement (4) for bearing the support arm (3), wherein the lamp head (2) comprises:
- a housing (10),
- a direct light arrangement (20) connected to the housing (10) that at least comprises a direct light lighting means with an associated light guide plate (31) for providing a direct light component, wherein light emitted by the direct light lighting means can be fed to a front side of the light guide plate (31) and can be output at a main side of the light guide plate (31),
- an indirect light arrangement (50) connected to the housing (10) that comprises an indirect light lighting means with an associated light directing structure for providing an indirect light component,
**characterized in that** the direct light arrangement (20) is rotatably arranged to the housing (10) and to the indirect light arrangement (50) and the axis of rotation is approximately perpendicular to the light guide plate (31).

2. Floor lamp or desk lamp (1) according to claim 1, **characterized in that** the housing (10) has a pot-shaped structure with an opening in a bottom portion of the pot-shaped structure in which the direct light arrangement (20) is rotatably arranged, wherein it can be provided that the direct light arrangement (20) has an annular frame, that the frame is placed at least in parts inside the opening of the pot-shaped structure of the housing (10) and that supports the optical components of the direct light arrangement (20) that at least comprise the direct light lighting means as well as the light guide plate (31).

3. Floor lamp or desk lamp (1) according to claim 2, **characterized in that** the edge portion that defines the opening in the bottom portion of the pot-shaped structure of the housing (10) as well as outer skirt portions of the annular frame form a radial catch assembly for axially maintaining the direct light arrangement (20) in the opening of the pot-shaped structure of the housing (10).

4. Floor lamp or desk lamp (1) according to claim 2 or 3, **characterized in that** a portion of the annular frame projects beyond the opening of the pot-shaped structure in the beam direction of the direct light arrangement (20) and is configured as an actuation portion for rotating the direct light arrangement (20) by applying a tangential force onto the actuation portion.

5. Floor lamp or desk lamp (1) according to claim 2, **characterized in that** the annular frame is heat conductively coupled to the direct light lighting means for dissipating waste heat.

6. Floor lamp or desk lamp (1) according to one of the claims 1 to 5, **characterized in that** the light guide plate (31) of the direct light arrangement (20) has, at its main side opposed to the light outputting main side, a structuring for deflecting light in direction of the light outputting main surface, wherein it can be provided that the structuring comprises a multitude of spaced linear structures for providing refracting surfaces that define recesses in the light guide plate (31).

7. Floor lamp or desk lamp (1) according to one of the claims 1 to 6, **characterized in that** the direct light arrangement (20) furthermore has a reflection element arranged at the main side of the light guide plate (31) that is opposed to the light outputting main side, configured in particular as a diffuser, and a glare control element placed in light direction behind the light outputting main side of the light guide plate (31) for providing an asymmetrical light distribution curve.

8. Floor lamp or desk lamp (1) according to one of the claims 1 to 7, **characterized in that** the direct light arrangement (20) has an approximately annular base surface perpendicularly to the axis of rotation with an optically active circular segment-shaped direct light exit surface.

9. Floor lamp or desk lamp (1) according to one of the claims 1 to 8, **characterized in that** the light guide plate (31) has a circular segment-shaped base surface, wherein the direct light lighting means is arranged along a chord of the circular segment.

10. Floor lamp or desk lamp (1) according to one of the claims 1 to 9, **characterized in that** the indirect light arrangement (50) has a support plate for supporting the second lighting means as well as a series connection in indirect light radiation direction of a light blending device, an anti-glare device and an optically transparent covering plate.

11. Floor lamp or desk lamp (1) according to one of the claims 1 to 10, **characterized in that** the indirect light lighting means has a multitude of LED devices arranged spaced from one another in a grid, wherein the light blending device has a plane honeycomb structure (54) adapted to the grid of the LED devices with a multitude of reflector bowls (55) in which a LED device is respectively received.

12. Floor lamp or desk lamp (1) according to one of the claims 10 or 11, **characterized in that** the anti-glare device has an anti-glare foil (34) that bears at the open front side of the honeycomb structure (54) that is remotely located to the LED devices on this structure, whereby it can be provided that the anti-glare foil (34) is designed for the glare control of the indirect light emitted out of the lamp head (2) in a predetermined direction and that a multitude of anti-glare ridges (57) spaced from one another are provided for the glare control of the glare control of the indirect light emitted out of the lamp head (2) in a direction perpendicular to the predetermined direction, these ridges being arranged parallel and congruent (coincident) to limiting ridges of the reflector bowls (55) of the honeycomb structure (54) and bearing on the anti-glare foil (34).

13. Floor lamp or desk lamp (1) according to one of the claims 1 to 10, **characterized by** a control device for triggering an operating unit of the direct light lighting means and/or of the indirect light lighting means, wherein the triggering can be carried out by the control device depending on externally supplied control information for fixing operating parameters, depending on supplied sensor signals and/or depending on internally stored operating parameters in a writable memory, wherein a motion and presence sensor can be provided for detecting in a predetermined close range and in a predetermined far range, the outlet of which is connected to the control device that is designed for triggering the direct light lighting means and/or the indirect light lighting means depending on the output signal of the motion or presence sensor.

14. Floor lamp or desk lamp (1) according to claim 13, **characterized in that** the control device is designed to trigger the operation of the indirect light lighting means when the motion or presence sensor has detected an object in the far range and/or the operation of the direct light lighting means as well as the indirect light lighting means when the motion or presence sensor has detected an object in the close range.

15. Floor lamp or desk lamp (1) according to claim 13 or 14, **characterized in that** the control device is designed to trigger the switching off of the indirect light lighting means when the motion or presence sensor has not detected any object in the close range over a predetermined duration.

16. Floor lamp or desk lamp (1) according to one of the claims 12 to 15, **characterized by** a first light sensor placed in the lamp head (2) with a detection angle range which overlaps with a cone of illumination of the indirect light arrangement (50) for detecting indirect light incident onto the lamp head (2), wherein the outlet of the light sensor is connected with the control device that is designed for triggering the direct light lighting means and/or the indirect light lighting means depending on the output signal of the light sensor.

17. Floor lamp or desk lamp (1) according to one of the claims 12 to 16, **characterized by** a second light sensor placed in the lamp head (2) for detecting light incident onto the lamp head (2) from a detection angle range that overlaps with a cone of illumination of the direct light arrangement (20), wherein the outlet of the second light sensor is connected with the control device that is designed for triggering the direct light lighting means and/or the indirect light lighting means depending on the output signal of the second light sensor.

18. Floor lamp or desk lamp (1) according to one of the claims 12 to 16, **characterized by** a network interface for coupling to a network of lamps and for exchanging operating parameters and/or sensor signals with further lamps connected to the network of lamps.

19. Lamp system with a multitude of floor lamps or desk lamps (1) according to claim 18 that are combined to a network of lamps respectively by their network interface, wherein the interconnected lamps (1) can be designed to exchange information over signals of the respective motion or presence sensor and to trigger the switching on of the respective indirect light lighting means when at least one of the motion or presence sensors of the interconnected lamps detects an object in the far range.

20. Lamp system according to claim 19, **characterized by** an external motion or presence sensor connected to the network of lamps and sending information by its output signal over the network of lamps to connected lamps, wherein the interconnected lamps (1) are designed to receive information over detection signals of the external motion or presence sensor and to trigger the switching on of the respective own indirect lighting means when the external motion or presence sensor detects an object.

## Revendications

1. Lampe de table ou lampadaire (1) qui présente une tête de lampe (2), un bras de support (3) pour porter la tête de lampe (2) ainsi qu'un dispositif de pied (4) pour soutenir le bras de support (3), cependant que la tête de lampe (2) comprend :
- un boîtier (10),
- un dispositif de lumière directe (20) relié au boîtier (10) qui comprend au moins un moyen d'éclairage de lumière directe avec une plaque de guidage de lumière associée (31) pour mettre à disposition une composante directe de la lumière, cependant que de la lumière émise par le moyen d'éclairage de lumière directe peut être introduite sur un côté frontal de la plaque de guidage de lumière (31) et découplée sur un côté principal de la plaque guide de lumière (31),
- un dispositif de lumière indirecte (50) relié au boîtier (10) qui comprend au moins un moyen d'éclairage de lumière indirecte avec une structure de guidage de la lumière associée pour mettre à disposition une composante indirecte de la lumière,
**caractérisée en ce que** le dispositif de lumière directe (20) est placé rotatif par rapport au boîtier (10) et au dispositif de lumière indirecte (50) et l'axe de rotation est à peu près perpendiculaire à la plaque de guidage de lumière (31).

2. Lampe de table ou lampadaire (1) selon la revendication 1, **caractérisée en ce que** le boîtier (10) présente une structure de type pot avec une ouverture dans une section de fond de la structure de type pot dans laquelle le dispositif de lumière directe (20) est placé rotatif, cependant qu'il peut être prévu que le dispositif de lumière directe (20) présente un cadre en forme d'anneau, que le cadre est placé au moins partiellement à l'intérieur de l'ouverture de la structure de type pot du boîtier (10) et que porte les composantes optiques du dispositif de lumière directe (20) qui comprennent au moins le moyen d'éclairage de lumière directe et la plaque de guidage de la lumière (31).

3. Lampe de table ou lampadaire (1) selon la revendication 2, **caractérisée en ce que** la section marginale qui définit l'ouverture dans la section de fond de la structure de type pot du boîtier (10) ainsi que des sections extérieures d'enveloppe du cadre en forme d'anneau forment un dispositif d'engrènement radial pour le maintien axial du dispositif de lumière directe (20) dans l'ouverture de la structure de type pot du boîtier (10).

4. Lampe de table ou lampadaire (1) selon la revendication 2 ou 3, **caractérisée en ce qu'**une section du cadre en forme d'anneau fait saillie de l'ouverture de la structure en forme de pot en direction du rayonnement du dispositif de lumière directe (20) et est configurée comme section d'actionnement pour faire tourner le dispositif de lumière directe (2) en appliquant une force tangentielle sur la section d'actionnement.

5. Lampe de table ou lampadaire (1) selon la revendication 2, **caractérisée en ce que** le cadre en forme d'anneau est couplé pour ce qui est de la technique de conductibilité technique au moyen d'éclairage de lumière directe pour évacuer la chaleur perdue.

6. Lampe de table ou lampadaire (1) selon l'une des revendications 1 à 5, **caractérisée en ce que** la plaque de guidage de la lumière (31) du dispositif de lumière directe (20) présente, sur son côté principal opposé au côté principal qui découple la lumière, une structuration pour dévier la lumière en direction de la surface principale qui découple la lumière, cependant qu'il peut être prévu que la structuration comprend une multitude de structures linéaires espacées pour mettre à disposition des surfaces de réfraction qui définissent des évidements dans la plaque de guidage de la lumière (31).

7. Lampe de table ou lampadaire (1) selon l'une des revendications 1 à 6, **caractérisée en ce que** le dispositif de lumière directe (20) présente de plus un élément de réflexion placé sur le côté principal de la plaque de guidage de la lumière (31) qui est opposé au côté principal qui découple la lumière, en particulier configuré comme un diffuseur, et un élément anti-éblouissement placé dans le sens de la lumière derrière le côté principal qui découple la lumière de la plaque de guidage de la lumière (31) pour mettre à disposition une courbe asymétrique de la répartition photométrique.

8. Lampe de table ou lampadaire (1) selon l'une des revendications 1 à 7, **caractérisée en ce que** le dispositif de lumière directe (20) présente une surface de base à peu près circulaire, perpendiculairement à l'axe de rotation, avec une surface de sortie de la lumière directe à effet optique en forme de segment de cercle.

9. Lampe de table ou lampadaire (1) selon l'une des revendications 1 à 8, **caractérisée en ce que** la plaque de guidage de la lumière (31) présente une surface de base en forme de segment de cercle, cependant que le moyen d'éclairage de lumière directe est placé le long d'une corde de cercle (30a) du segment de cercle.

10. Lampe de table ou lampadaire (1) selon l'une des revendications 1 à 9, **caractérisée en ce que** le dispositif de lumière indirecte (50) présente une plaque de support pour porter le second moyen d'éclairage ainsi qu'un montage en série dans le sens de l'émission de la lumière indirecte d'un dispositif de mélange de la lumière, d'un dispositif anti-éblouissement et d'une plaque de recouvrement optiquement transparente.

11. Lampe de table ou lampadaire (1) selon l'une des revendications 1 à 10, **caractérisée en ce que** le dispositif de lumière indirecte (50) présente une multitude de dispositifs LED placés en une trame et espacés les uns des autres, cependant que le dispositif de mélange de la lumière présente une structure plane en nid d'abeille (54) adaptée à la trame des dispositifs LED, avec une multitude de logements de réflecteur (55) dans chacun desquels un dispositif LED est logé.

12. Lampe de table ou lampadaire (1) selon l'une des revendications 10 ou 11, **caractérisée en ce que** le dispositif anti-éblouissement présente une feuille anti-éblouissement (34) qui repose sur le côté frontal ouvert de la structure en nid d'abeille (54), situé éloigné des dispositifs LED, sur celui-ci, cependant qu'il peut être prévu que la feuille anti-éblouissement (34) est configurée pour protéger contre l'éblouissement de la lumière indirecte émise par la tête de la lampe (2) dans une direction prédéterminée et qu'il est prévu, pour protéger contre l'éblouissement de la lumière indirecte émise par la tête de la lampe (2) dans une direction perpendiculaire à la direction prédéterminée, une multitude de barrettes anti-éblouissantes (57) espacées l'une de l'autre qui sont placées parallèlement et congruentes (qui coïncident avec) aux barrettes anti-éblouissantes des logements de réflecteur (55) de la structure en nid d'abeille (54) et qui reposent sur la feuille anti-éblouissement (34).

13. Lampe de table ou lampadaire (1) selon l'une des revendications 1 à 12, **caractérisée par** un dispositif de commande pour commander un appareillage du moyen d'éclairage de lumière directe et/ou du moyen d'éclairage de lumière indirecte, cependant que la commande par le dispositif de commande peut être exécutée en fonction d'informations de commande amenées de l'extérieur pour fixer des paramètres de fonctionnement, en fonction de signaux de détecteur qui lui sont amenés et/ou de paramètres de fonctionnement enregistrés de manière interne dans une mémoire enregistrable, cependant qu'un détecteur de mouvement ou de présence peut être prévu pour la détection dans une zone de proximité définie et dans une zone éloignée prédéterminée, détecteur dont la sortie est reliée au dispositif de commande qui est configuré, pour commander le moyen d'éclairage de lumière directe et/ou le moyen d'éclairage de lumière indirecte en fonction du signal de sortie du détecteur de mouvement ou de présence.

14. Lampe de table ou lampadaire (1) selon la revendication 2, **caractérisée en ce que** le dispositif de commande est agencé pour commander le fonctionnement du moyen d'éclairage de lumière indirecte lorsque le détecteur de mouvement ou de présence a détecté un objet dans la zone éloignée et/ou le moyen d'éclairage de lumière directe ainsi que le moyen d'éclairage de lumière indirecte lorsque le détecteur de mouvement ou de présence a détecté un objet dans la zone de proximité.

15. Lampe de table ou lampadaire (1) selon la revendication 13 ou 14, **caractérisée en ce que** le dispositif de commande est agencé pour commander l'extinction du moyen d'éclairage de lumière indirecte lorsque le détecteur de mouvement ou de présence n'a pas détecté d'objet dans la zone de proximité pendant une durée prédéterminée.

16. Lampe de table ou lampadaire (1) selon l'une des revendications 12 à 15, **caractérisée par** un premier détecteur de lumière placé dans la tête de lampe (2) avec une plage angulaire de détection qui se chevauche avec un cône d'éclairage du dispositif de lumière indirecte (50), pour la détection de lumière indirecte incidente sur la tête de lampe (2), cependant que la sortie du détecteur de lumière est reliée au dispositif de commande qui est configuré pour commander le moyen d'éclairage de lumière directe et/ou le moyen d'éclairage de lumière indirecte en fonction du signal de sortie du détecteur de lumière.

17. Lampe de table ou lampadaire (1) selon l'une des revendications 12 à 16, **caractérisée par** un second détecteur de lumière placé dans la tête de lampe (2) pour la détection de lumière incidente sur la tête de lampe (2), à partir d'une plage angulaire de détection qui se chevauche avec un cône d'éclairage du dispositif de lumière directe (20), cependant que la sortie du second détecteur de lumière est reliée au dispositif de commande qui est configuré pour commander le moyen d'éclairage de lumière directe et/ou le moyen d'éclairage de lumière indirecte en fonction du signal de sortie du second détecteur de lumière.

18. Lampe de table ou lampadaire (1) selon l'une des revendications 12 à 17, **caractérisée par** une interface de réseau pour le couplage à un réseau de lampes et pour l'échange de paramètres de fonctionnement et/ou de signaux de capteurs avec d'autres lampes raccordées au réseau de lampes.

19. Système de lampes avec une multitude de lampes de table ou de lampadaires (1) selon la revendication 18 qui sont réunies en un réseau de lampes par l'interface de réseau de chacune, les lampes interconnectées (1) pouvant être configurées pour échanger des informations sur des signaux du détecteur de mouvement ou de présence respectif et pour commander l'allumage de chacun des moyens d'éclairage de lumière indirecte lorsqu'au moins l'un des détecteurs de mouvement ou de présence des lampes interconnectées détecte un objet dans la zone éloignée.

20. Système de lampes selon la revendication 19, **caractérisé par** un détecteur externe de mouvement ou de présence raccordé au réseau de lampes et qui envoie des informations sur son signal de sortie par le réseau de lampes à des lampes raccordées, cependant que les lampes interconnectées (1) sont configurées pour recevoir des informations sur des signaux de détection du détecteur externe de mouvement ou de présence et pour commander chaque propre lampe de lumière indirecte lorsque le détecteur de mouvement ou de présence détecte un objet.
